## Europäisches Patentamt
## European Patent Office
## Office européen des brevets

(11) Veröffentlichungsnummer: **0 085 753**
**A1**

(12) **EUROPÄISCHE PATENTANMELDUNG**

(21) Anmeldenummer: **82109761.5**

(22) Anmeldetag: **22.10.82**

(51) Int. Cl.³: **H 04 B 3/54**
**H 02 J 13/00**

(30) Priorität: **05.02.82 CH 696/82**

(43) Veröffentlichungstag der Anmeldung:
**17.08.83 Patentblatt 83/33**

(84) Benannte Vertragsstaaten:
**AT BE DE NL SE**

(71) Anmelder: **LGZ LANDIS & GYR ZUG AG**
**Konzern-Patentabteilung**
**CH-6301 Zug(CH)**

(72) Erfinder: **Schmucki, Peter**
**Fliederweg 10**
**CH-6340 Baar(CH)**

(54) System zur Übertragung digitaler Signalimpulse über Leitungen eines Wechselstrom-Verteilungsnetzes.

㉟ In einem System zur Uebertragung digitaler Signalimpulse über Leitungen eines Wechselstrom-Energieverteilungsnetzes, werden "Chirp"-Frequenzmodulierte netzsynchronisierte Signalimpulse im Frequenz-Multiplexverfahren von einem Fernwirk-Sender (21) in einer an einem Niederspannungsnetz (16) angeschlossenen Unterstelle (2) zu einem Fernwirk-Empfänger (22) in einer Zentrale (1) gesendet. Der Eingang dieses Fernwirk-Empfängers (22) ist mit einer das Niederspannungsnetz (16) speisenden Mittelspannungsebene über einen Ankopplungswandler (10) verbunden. Die Frequenzhübe frequenzmässig benachbarter "Chirp"-Signal-impulse sind teilweise überlappend. Die Einsatz- und Schlussflanken der Amplituden-Umhüllenden der "Chirp"-Signalimpulse besitzen eine vorgegebene, begrenzte Steilheit gemäss einer Kosinusfunktion. Die Unterstelle (2) enthält noch eine Steuerschaltung (24), eine Aufbereitungsschaltung (25), eine Rückstellschaltung (29) sowie einen Rundsteuerungsempfänger (19) und die Zentrale (1) ein Fernwirk-Auswertegerät (23), einen Rundsteuerungssender (18) und eine Rundsteuerungszentrale (17).

EP 0 085 753 A1

./...

Croydon Printing Company Ltd

FIG.1

System zur Uebertragung digitaler Signalimpulse über Leitungen
eines Wechselstrom-Verteilungsnetzes

_____

## Anwendungsgebiet und Zweck

Die Erfindung bezieht sich auf ein System zur Uebertragung digitaler Signalimpulse über Leitungen eines Wechselstrom-Energieverteilungsnetzes, vorwiegend entgegengesetzt zur Flussrichtung der
Netzenergie, unter Anwendung einer "Chirp"-Frequenzmodulation
und des Frequenzmultiplex-Verfahrens sowie einer Synchronisierung
der Signalerzeugung in einem Sender und der Signalverarbeitung
in einem Empfänger mit Hilfe der Frequenz der Netzwechselspannung.

## Stand der Technik

Ein solches System ist bekannt aus der DE-AS 27 27 263. In dieser
Auslegeschrift werden zeitlich ideale "Chirp"-Modulationen mit konstanten Amplituden beschrieben, die jedoch den Nachteil eines
übergrossen Frequenzspektrums besitzen, was die Eliminierung von
Störfrequenzen erschwert. Zusätzlich finden sich in dieser Ausleschrift Angaben betreffend ein Frequenzmultiplex-Verfahren mit
nicht überlappenden Frequenzbereichen benachbarter Sender. Dieses Verfahren ermöglicht somit bei gegebener Bandbreite sowohl
des Uebertragungsweges als auch des Sendesignals nur den gleichzeitigen Betrieb einer relativ eingeschränkten Anzahl von Uebertragungskanälen auf dem gleichen Uebertragungsweg.

## Aufgabe und Lösung

Der Erfindung liegt die Aufgabe zugrunde, eine Modulationsart
sowie Sende- und Empfangsmittel zu finden zur Erhöhung der Informationsdichten auf dem Uebertragungsweg und zur Ueberwindung
spezieller, auf diesem Uebertragungsweg in der Regel vorherrschender Uebertragungsbedingungen. Es können dies z.B. sein:

- Uebermässig hohe Leitungs- und Transformatoren-Dämpfungen

- Starke Phasen- und Frequenzverschiebungen

- Grosse Laufzeiten                                          ./.

PA 2185

- Unterschiedlich starke und vielfältige Störungsarten, wie z.B. Netzharmonische, unterschiedlich lange Schaltimpulse, Bündelstörer und nichtweisses Rauschen.

Die genannte Aufgabe wird erfindungsgemäss durch die im Kennzeichen des Anspruchs 1 angegebenen Merkmale gelöst.

Ein Ausführungsbeispiel der Erfindung ist in der Zeichnung dargestellt und wird im folgenden näher beschrieben.

Es zeigen: Fig. 1 Ein Blockschaltbild eines Uebertragungssystems,

Fig. 2 ein Blockschaltbild einer Aufbereitungsschaltung,

Fig. 3 ein Schaltbild eines Analog/Digital-Wandlers,

Fig. 4 ein Blockschaltbild einer Steuerschaltung,

Fig. 5 ein Blockschaltbild eines Fernwirk-Senders,

Fig. 6 eine Gegenüberstellung einer "Chirp"-Modulation mit konstanter und nichtkonstanter Amplitude,

Fig. 7 eine Frequenzaufteilung der Uebertragungskanäle,

Fig. 8 Signalverhältnisse auf dem Uebertragungsweg,

Fig. 9 ein Blockschaltbild eines Fernwirk-Empfängers,

Fig. 10 ein Blockschaltbild einer Empfangssignal-Aufbereitungsschaltung und

Fig. 11 ein Blockschaltbild eines Demodulators.

Gleiche Bezugszahlen bezeichnen in allen Figuren der Zeichnung gleiche Teile. Alle in der Beschreibung mit 74LS... benannten Bauelemente sind solche der Firma Texas Instruments, Dallas, Texas. Alle mit MC... bezeichneten solche der Firma Motorola, Phoenix, Arizona und alle mit LM... bzw. LF... bezeichneten solche der Firma National Semiconductor, Santa Clara, California.

./.

PA 2185

Beschreibung

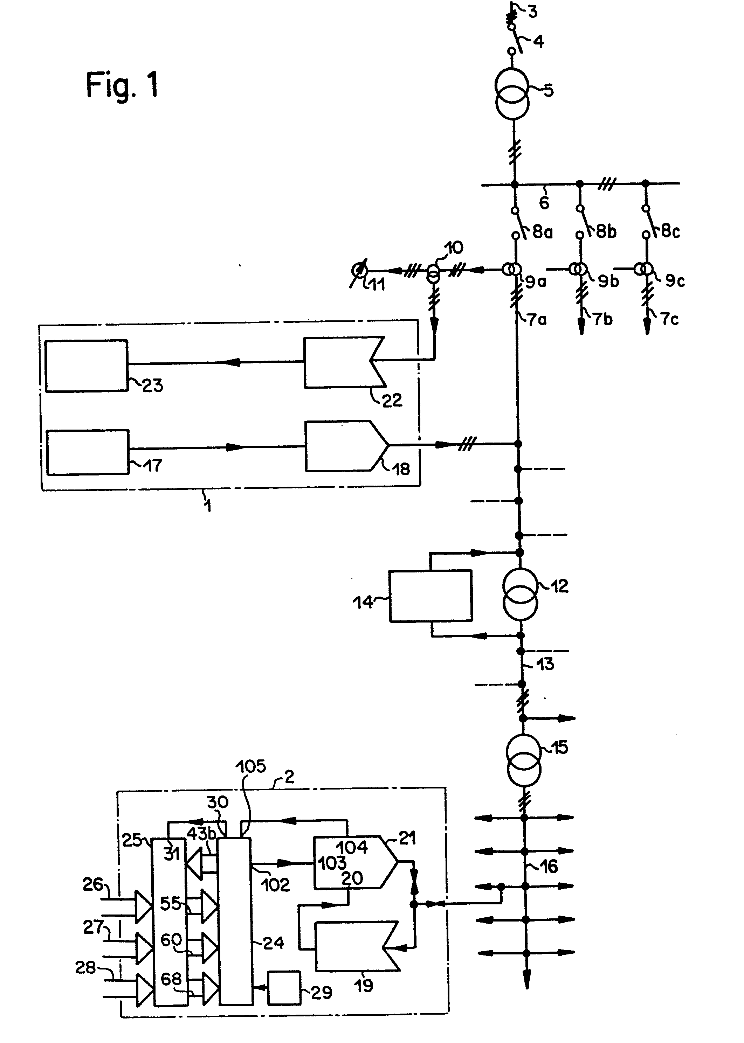

Das in der Fig. 1 dargestelltes Blockschaltbild eines Uebertragungssystems zeigt ein dreiphasiges Wechselstrom-Verteilungsnetz, eine Zentrale 1 und mindestens eine Unterstelle 2. Im ersteren speist eine Hochspannung 3 von z.B. 50 kV und einer Frequenz von 50 bzw. 60 Hz über einen Hochspannungsschalter 4 und einen ersten Transformator 5 eine obere, ebenfalls dreiphasige Mittelspannungsebene 6 mit einer Spannung von z.B. 16,5 kV. Diese Mittelspannungsebene 6 teilt sich auf in mehrere, z.B. drei, dreiphasige "Feeder" 7a, 7b und 7c, wobei jeder dieser "Feeder" einen eigenen dreipoligen Mittelspannungsschalter 8a, 8b bzw. 8c und einen eigenen, z.B. je aus drei Einphasen-Wandlern bestehenden Messwandler 9a, 9b bzw. 9c besitzt. Diese Messwandler können Strom- oder Spannungswandler sein. In der Fig. 1 wurde das Vorhandensein von Stromwandlern angenommen.

Die Sekundärwicklungen der drei Einphasen-Wandler eines jeden der drei Messwandler 9a, 9b bzw. 9c speisen je einen Messkreis, bestehend aus einem Messgerät, z.B. einem Amperemeter, und einer der Primärwicklungen eines dreiphasigen Ankopplungswandlers. Jedem "Feeder" 7a, 7b bzw. 7c ist ein solcher dreiphasiger, z.B. ebenfalls aus drei Einphasen-Wandler bestehender Ankopplungswandler zugeordnet, der sowohl ein Strom- als auch ein Spannungswandler sein kann. Auch hier wurde wiederum das Vorhandensein von Stromwandlern angenommen, deren Primärkreise somit in Reihe geschaltet sind mit dem zugehörigen Messgerät. Dem "Feeder" 7a sind z.B. der Ankopplungswandler 10 und das Amperemeter 11 zugeordnet. In der Fig. 1 ist nur ein einziger, nämlich der vom "Feeder" 7a gespeiste Messkreis dargestellt. An den drei Sekundärwicklungen des dreiphasigen Ankopplungswandlers 10 liegt der Eingang der Zentrale 1.

Die "Feeder" der oberen Mittelspannungsebene 6 sind manchmal über ihren Mittelspannungsschalter 8a, 8b bzw. 8c, die Primärkreise ihrer als Stromwandler eingesetzten Messwandler 9a,

./.

9b bzw. 9c und je einen zweiten Transformator, z.B. im "Feeder"
7a über den zweiten Transformator 12, mit einer unteren, ebenfalls dreiphasigen Mittelspannungsebene verbunden, z.B. der
Mittelspannungsebene 13 im Falle des "Feeders" 7a. Diese untere
Mittelspannungsebene 13 führt z.B. eine Spannung von 4 kV.
Parallel zu jedem zweiten Transformator ist jeweils ein Isolierverstärker entgegengesetzt zur Energieflussrichtung des Wechselstrom-
Verteilungsnetzes geschaltet, z.B. parallel zum zweiten Transformator 12 der Isolierverstärker 14.

Die untere Mittelspannungsebene 13 des "Feeders" 7a speist über
einen dritten Transformator 15 ein Niederspannungsnetz 16 von
z.B. 220 V. Am letzteren ist in der Fig. 1 die Unterstelle 2
angeschlossen. Diese kann jedoch auch ersatzweise über einen
nichtgezeichneten Spannungswandler mit der Mittelspannungsebene
13 verbunden sein.

Die Zentrale 1 enthält eine bekannte Rundsteuerungs-Zentrale 17,
welche über einen ebenfalls bekannten Rundsteuerungs-Sender 18,
über einen der "Feeder" der oberen Mittelspannungsebene 6,
z.B. über den "Feeder" 7a, die untere Mittelspannungsebene 13
und das Niederspannungsnetz 16 einen bekannten Rundsteuerungs-
Empfänger 19 in der Unterstelle 2 ansteuert. Die erwähnten Rundsteuerungsgeräte bilden ein bekanntes Rundsteuersystem, welches
nicht Gegenstand eines Anspruchs ist und daher auch nicht näher
beschrieben wird. Es dient hier ausschliesslich zur Uebertragung
eines Aufrufbefehls von der Zentrale 1 zur Unterstelle 2. Daher
liegt der einzige in der Fig. 1 gezeichnete Ausgang des Rundsteuerungs-Empfängers 19 - es wurde das Vorhandensein eines Relaiskontaktausganges angenommen - am Aufrufeingang 20 eines Fernwirk-Senders 21.

Der Eingang des Rundsteuerungs-Empfängers 19 und der Ausgang
des Fernwirk-Senders 21 sind in der Unterstelle 2 untereinander
und mit dem Niederspannungsnetz 16 verbunden. Die Ausgangssignale des Fernwirk-Senders 21 erreichen über das Niederspan-

./.

nungsnetz 16, die untere Mittelspannungsebene 13, den "Feeder" 7a, den Messwandler 9a und den Ankopplungswandler 10 den Eingang der Zentrale 1, der gleichzeitig der Eingang eines Fernwirk-Empfängers 22 ist, dessen Ausgang seinerseits den Eingang eines Fernwirk-Auswertegerätes 23 steuert.

Die Unterstelle 2 enthält im übrigen noch eine Steuerschaltung 24, eine Aufbereitungsschaltung 25, ein Messwert-Eingangsbus 26, ein Zählwert-Eingangsbus 27, ein Melde-Eingangsbus 28 und eine Rückstellschaltung 29. Ausserdem sind unter anderem ein Systemtaktausgang 30 und ein Systemtakteingang 31 angedeutet.

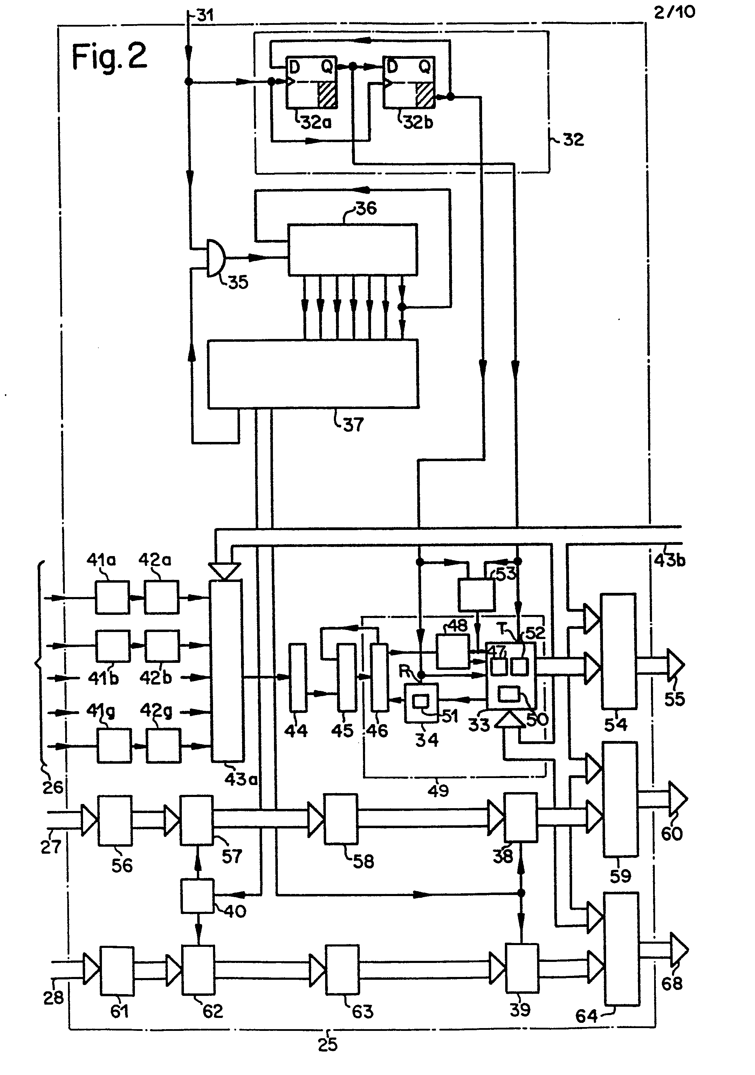

Ein Blockschaltbild der Aufbereitungsschaltung 25 ist in der Fig. 2 dargestellt.

Der Systemtakteingang 31 der Aufbereitungsschaltung 25 wird von dem erwähnten Systemtaktausgang 30 der Steuerschaltung 24 mit einer Systemtaktfrequenz von 2 MHz gespeist, und ist gleichzeitig der Eingang eines Frequenzteilers 32, der diese Frequenz durch vier teilt. Dieser Frequenzteiler 32 ist mittels einer Kaskadenschaltung zweier Flip Flop 32a und 32b, z.B. vom Typ 74LS74, aufgebaut und besitzt zwei um $90^\circ$ phasenverschobene 500 kHz-Ausgänge. Die beiden miteinander verbundenen Takteingänge dieser beiden Flip Flop bilden den Eingang des Frequenzteilers, und der Q-Ausgang des ersten Flip Flop 32a steuert den D-Eingang des nachfolgenden zweiten Flip Flop 32b, während dessen $\overline{Q}$-Ausgang seinerseits auf den D-Eingang des ersten Flip Flop 32a zurückgekoppelt ist. Ein mit dem Eingangssignal des Frequenzteilers 32 phasengleiches Ausgangssignal erscheint am Q-Ausgang des ersten Flip Flop 32a und liegt am Takteingang T einer Zählkette 33, und das um $90^\circ$ phasenverschobene Signal am $\overline{Q}$-Ausgang des zweiten

PA 2185

./.

Flip Flop 32b speist einen Rampentakteingang R einer ersten Transformatorschaltung 34. Die Systemtaktfrequenz von 2 MHz erreicht ebenfalls über einen ersten Eingang eines zwei Eingänge aufweisenden Und-Gatters 35, z.B. vom Typ 74LS08, den Takteingang eines Johnson-Zählers 36, der z.B. mittels eines Schieberegisters vom Typ 74LS164 aufgebaut ist und dessen Parallelausgänge einen Decodierer 37 speisen. Das letzte Bit des Johnson-Zählers 36 ist auf dessen Dateneingang zurückgekoppelt. Der Decodierer 37 ist mittels mehrerer And-Gatter, z.B. vom Typ 74LS08, und Inverter, z.B. vom Typ 74LS04 aufgebaut. Ein erster Ausgang des Decodierers 37 sperrt über dessen zweiten Eingang das Und-Gatter 35, während ein zweiter Ausgang mit den Takteingängen eines ersten und eines zweiten Pufferspeichers 38 und 39 und ein dritter Ausgang mit einem Steuereingang einer Stromquelle 40 verbunden sind. An diesen drei Ausgängen des Decodiereres 37 erscheinen jeweils im richtigen, durch den Johnson-Zähler 36 vorgegebenen Augenblick ein Sperrsignal (erster Ausgang) bzw. Freigabesignale (zweiter und dritter Ausgang).

Die Unterstelle 2 (Fig. 1) dient dem Erfassen und Uebertragen von Fernwirkinformationen, vorzugsweise in entgegengesetzter Richtung zur Energieflussrichtung des Wechselstrom-Verteilungsnetzes. Eine oder mehrere Unterstellen können mit einem Uebertragungskanal betrieben werden.

Es sind folgende Informationen zu übertragen:

a)  Spontane Meldungen innert Sekunden sowie repetitive, z.B. alle 60 Sekunden, jedoch ohne Quittierung.

b)  Zyklische Messwerte alle 1 bis 5 Minuten.

c)  Zyklische Zählwerte alle 5 bis 30 Minuten, mit einem festen "Freeze-Zyklus", der unabhängig und wesentlich langsamer

./.

PA 2185

als der Uebertragungszyklus ist, so dass in jeder "Freeze-Periode" mehrere Uebertragungen desselben Zählerstandes möglich sind. Es findet keine unverlierbare Zählwert-Speicherung statt.

Jedes Telegramm enthält alle Informationen.

Der Messwert-, der Zählwert- und der Melde-Eingangsbus 26, 27 und 28 sind gleichzeitig die gleichnamigen Bus-Eingänge der Aufbereitungsschaltung 25 (Fig. 2). Vorteilhaft besitzt jeder Eingangsbus 26, 27 und 28 eine gleiche Anzahl, z.B. acht, Leitungen. In diesem Fall können acht Messwerte, acht Zählwerte und acht Meldungen übertragen werden.

Jede Leitung des Messwert-Eingangsbus 26 ist mit einem analogen Messwert belegt. Der Pegel eines jeden dieser Messwerte, z.B. von 22 bis 100 V bzw. von 1 VA bis 50 VA, wird in einer zugehörigen Pegelanpassschaltung 41a bis 41g, bestehend je aus einem Widerstandsnetzwerk mit eingebautem Potentiometer, auf einen den nachfolgenden Schaltungen angepassten Spannungsbereich von z.B. + 2 bis - 2 V beschränkt, anschliessend über je ein RC-Filter erster Ordnung 42a bis 42g, das der Eliminierung von Brummstörungen $\geq$ 50 Hz dient, den Signaleingängen eines analogen Multiplexers 43a zugeleitet. Die Messwert-Eingangssignale sind bi- oder unipolare Gleichströme oder Gleichspannungen.

Die von einem Steuerbus 43b gesteuerte Adresse-Eingänge des Multiplexers 43a wählen während der für die Messwertauswertung reservierten Zeit im Zeitmultiplex-Verfahren zeitlich nacheinander die einzelnen Signaleingänge des Multiplexers 43a aus und schalten die dort anstehenden, aufbereiteten analogen Messwerte zeitlich nacheinander durch auf den Eingang des nachfolgenden Pufferverstärkers 44, der als Impedanz-Wandler arbeitet und z.B. ein mittels eines Operationsverstärkers LM 301A aufgebauter nichtinvertierender Verstärker mit dem Verstärkungsfaktor

./.

PA 2185

Eins ist. Durch dessen hochohmige Eingangsimpedanz wird die Belastung des Eingangskreises niedrig gehalten.

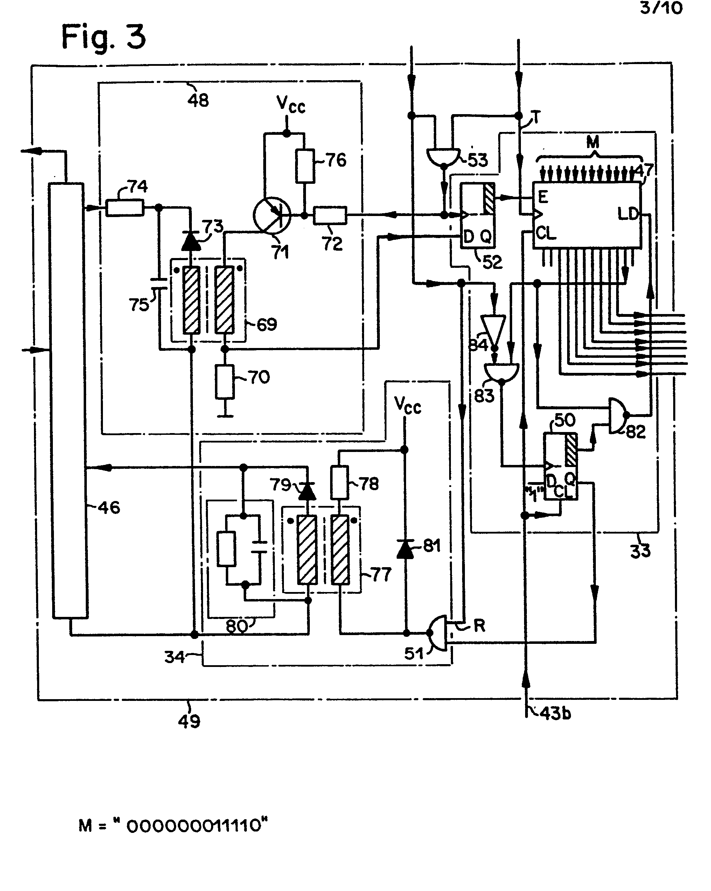

Der Ausgang des Pufferverstärkers 44 liegt an einem ersten Eingang eines mittels eines Operationsverstärkers LM 301A aufgebauten Summenverstärkers 45, dessen Ausgang seinerseits den Eingang eines Spannungs/Zeit-Wandlers 46, z.B. vom Typ MC1405, ansteuert. Dieser Spannungs/Zeit-Wandler 46 enthält z.B. eine Spannungs-Referenzquelle, deren Ausgang einen zweiten Eingang des Summenverstärkers 45 speist, so dass die Nullspannung der Schaltung verschoben wird durch eine mittels eines nichtgezeichneten Potentiometers innerhalb des Summenverstärkers 45 eingestellte Referenzspannung. Das Potentiometer ist ein Teil des Summenverstärkers 45, und die Ausgangsspannung des letzteren beträgt z.B. 0 V bis 2 V. Der Ausgang des Spannungs/Zeit-Wandlers 46 speist die Zählkette 33, die z.B. unter anderem eine Kaskadenschaltung 47 mehrerer Binärzähler vom Typ MC 40161 enthält, über eine der galvanischen Entkopplung dienende zweite Transformatorschaltung 48. Der Spannungs/Zeit-Wandler 46, die Zählkette 33 und die beiden Transformatorschaltungen 34 und 48 bilden zusammen einen Analog/Digital-Wandler 49, der nach dem bekannten "Dual-Slope"-Prinzip arbeitet. Der Schaltungsaufbau der Blöcke 33, 34 und 48 wird später anhand der Fig. 3 noch näher erläutert.

Ein vom Steuerbus 43b geliefertes Start-Signal setzt in der Zählkette 33 alle Binärzähler der Kaskadenschaltung 47 sowie ein "Ramp"-Flip Flop 50 auf Null zurück. Das letztere sperrt über einen ersten Eingang eines zwei Eingänge aufweisenden Freigabegatters 51 die an dessen zweiten Eingang, der gleichzeitig der Rampentakteingang R der ersten Transformatorschaltung 34 ist, anstehende 500 kHz-Rampentaktfrequenz, so dass am "Ramp"-Eingang des Spannungs/Zeit-Wandlers 46 der Logikwert "0" ansteht.

Im Spannungs/Zeit-Wandler 46 legt dann ein "Ramp-Control"-Umschalter einen der Eingangsspannung proportionalen Strom an den Eingang eines Integrators, dessen Ausgangsspannung demnach

./.

PA 2185

kontinuierlich von Null ausgehend ansteigt bis sie den Schwellwert eines nachgeschalteten Komparators erreicht. Von diesem Augenblick an wird vom Ausgang des Komparators, der gleichzeitig der Ausgang des Spannungs/Zeit-Wandlers 46 ist, über der zweiten Transformatorschaltung 48 in der Zählkette 33 ein Freigabe-Flip Flop 52 umgeschaltet, so dass mittels der Kaskadenschaltung 47 der Zählkette 33 eine fixe Integrationszeit gerechnet wird durch Aufzählen von 500 kHz-Taktimpulsen, die vom Frequenzteiler 32 über den Takteingang T der Zählkette 33 den Takteingängen der Binärzähler der Kaskadenschaltung 47 zugeleitet werden.

Der Rampentakteingang R der ersten Transformatorschaltung 34 ist mit einem ersten Eingang und der Takteingang T der Zählkette 33 mit einem zweiten Eingang eines zwei Eingänge aufweisenden Nand-Gatters 53 verbunden, welches als Impulsformer dient und dessen Ausgang den Leseeingang der zweiten Transformatorschaltung 48 und den Takteingang des Freigabe-Flip Flop 52 der Zählkette 33 steuert.

Ein dritter bis zehnter Parallelausgang der Kaskadenschaltung 47 der Zählkette 33 bilden einen digitalen 8-Bit Datenbus, der über einen ersten vom Steuerbus 43b gesteuerten "Tri-state"-Datenselektor 54 mit einem Messwert-Ausgangsbus 55 der Aufbereitungsschaltung 25 verbunden ist.

Die Zählwert- und Melde-Schaltkreise der Aufbereitungsschaltung 25 sind identisch aufgebaut, da auf jeder Leitung des Zählwert- und des Melde-Eingangsbus 27 bzw. 28 Logikwerte "1" bzw. "0" anstehen. Im Falle der Zählwerte sind dies digitale Impulsfolgen, deren Frequenzen den Zählwerten proportional sind, und im Falle der Meldungen handelt es sich um digitale Dauersignale.

Der Zählwert-Eingangsbus 27 speist eine erste Filtergruppe 56, deren Ausgänge die Eingänge einer ersten Transformatoren-Gruppe 57 und deren Ausgänge ihrerseits wiederum die Eingänge einer

./.

ersten Detektorengruppe 58 steuern. Die einzelnen Impulse einer jeden Impulsreihe am Ausgang der Detektorengruppe 58 werden anschliessend in dem ersten Pufferspeicher 38 kurzzeitig abgespeichert und dann über einen zweiten, ebenfalls vom Steuerbus 43b gesteuerten "Tri-state"-Datenselektor 59 einem Zählwert-Ausgangsbus 60 der Aufbereitungsschaltung 25 zugeleitet.

Der Melde-Eingangsbus 28 speist seinerseits in der angegebenen Reihenfolge über eine zweite Filtergruppe 61, eine zweite Transformatoren-Gruppe 62, eine zweite Detektorengruppe 63, den zweiten Pufferspeicher 39 und einen dritten, auch vom Steuerbus 43b gesteuerten "Tri-state"-Datenselektor 64 einen Melde-Ausgangsbus 68 der Aufbereitungsschaltung 25.

Alle drei Datenselektoren 54, 59 und 64 sind z.B. vom Typ 74LS257. Statt diesen Datenselektoren können auch die "Ports" eines Schreib/Lese-Speichers benutzt werden.

Der dritte Ausgang des Decodierers 37 steuert im richtigen, durch den Johnson-Zähler 36 vorgegebenen Augenblick den Steuereingang der Stromquelle 40, deren Ausgänge ihrerseits die erste und die zweite Transformatoren-Gruppe 57 und 62 speisen. Der zweite Ausgang des Decodierers 37 steuert ebenfalls im richtigen, durch den Johnson-Zähler 36 vorgegebenen Augenblick die Takteingänge des ersten und des zweiten Pufferspeichers 38 und 39.

Der Steuerbus 43b wirkt, wie bereits erwähnt, auf die Steuereingänge der drei Datenselektoren 54, 59 und 64 und nimmt diese Datenselektoren im gegebenen Augenblick zeitlich nacheinander in Betrieb, und zwar so, dass jeweils ein einziger dieser Datenselektoren durchgeschaltet ist.

Jede der beiden Filtergruppen 56 und 61, der beiden Transformatoren-Gruppen 57 und 62 und der beiden Detektorengruppen 58 und 63 besitzt für jeden Leiter der Zählwert- bzw. der Melde-Eingangsbusverbindung 27 und 28 je ein Filter und für jedes Leiter-

./.

paar einen Transformator bzw. einen Detektor. Auch die Stromquelle 40 enthält für jedes Leiterpaar einer jeden der beiden
Eingangsbusverbindungen 27 und 28 einen bipolaren Transistor.
Alle diese Transistoren werden innerhalb der Stromquelle 40 von
einer gemeinsamen, nicht gezeichneten weiteren Stromquelle gesteuert. Die Funktionsweise zweier Leitungen innerhalb der Zähl-
wert- bzw. Melde-Aufbereitungsschaltung mit der dazugehörigen
Stromquelle ist aus der deutschen Patentschrift 25 33 483 ersichtlich und wird daher nicht weiter beschrieben.

In der Fig. 3 ist ein Schaltbild des Analog/Digital-Wandlers 49
dargestellt, bestehend, wie bereits erwähnt, aus dem Spannungs/
Zeit-Wandler 46, der ersten Transformatorschaltung 34, der zweiten Transformatorschaltung 48 und der Zählkette 33.

In der zweiten Transformatorschaltung 48 liegt der erste Pol
der Primärwicklung eines zweiten Trenntransformators 69 über
einen ersten Vorwiderstand 70 an Masse und der zweite Pol über
die Kollektor-Emitter-Strecke eines bipolaren Transistors 71 am
positiven Pol der Speisegleichspannung $V_{cc}$. Die Basis des Transistors 71 ist über einen Basiswiderstand 72 mit dem Leseeingang
der zweiten Transformatorschaltung 48 verbunden und wird gleichzeitig wie der Takteingang des Freigabe-Flip Flop 52 der Zählkette 33 vom Ausgang des Nand-Gatters 53 mit dessen 500 kHz-Ausgangssignal getastet. Liegt im Augenblick der positiv gehenden
Flanke dieses Ausgangssignals gerade ein Logikwert "0" am Ausgang des Spannungs/Zeit-Wandlers 46, so ist die Sekundärwicklung des zweiten Trenntransformators 69 über eine erste Diode 73
in Durchlassrichtung und einen niederohmigen Reihenwiderstand 74
kurzgeschlossen, d.h. dieser Sekundärkreis ist niederohmig. Es
fliesst somit in ihm und demnach auch im dazugehörigen Primärkreis, dessen Transistor 71 ja wegen des 500 kHz-Ausgangssignals
des Nand-Gatters 53 durchgeschaltet ist, kurzzeitig ein grosser
Strom, der in dem ersten Vorwiderstand 70 einen Spannungsfall
erzeugt, dessen Grösse einem Logikwert "1" entspricht und der,
da er am D-Eingang des Freigabe-Flip Flop 52 liegt, in diesem

./.

PA 2185

abgespeichert wird. Liegt dagegen am Ausgang des Spannungs/ Zeit-Wandlers 46 ein Logikwert "1", so ist der Sekundärkreis wegen der Polung der Diode gesperrt, d.h. hochohmig, und es kann in ihm kein bedeutender Strom fliessen. Demnach fliesst auch bei durchgeschaltetem Transistor 71 im Primärkreis des zweiten Trenntransformators 69 kein Strom, und ein Logikwert "0" wird im Freigabe-Flip Flop 52 der Zählkette 33 abgespeichert. Parallel zur Reihenschaltung der Sekundärwicklung des zweiten Trenntransformators 69 und der ersten Diode 73 liegt ein Kondensator 75 zum Kurzschliessen von Schaltspannungsspitzen. Zwischen dem positiven Pol der Speisegleichspannung $V_{cc}$ und der Basis des Transistors 71 ist noch ein Widerstand 76 geschaltet. In der ersten Transformatorschaltung 34 liegt ein erster Pol der Primärwicklung eines ersten Trenntransformators 77 über einen niederohmigen Speisewiderstand 78 am positiven Pol der Speisegleichspannung $V_{cc}$, und der zweite Pol erhält vom Ausgang des Freigabegatters 51 ein 500 kHz-Taktsignal, wobei ein Eingang dieses Freigabegatters 51, wie bereits erwähnt, vom Ausgang des "Ramp"-Flip Flop 50 freigegeben wird. Enthält dieses den Logikwert "1", so fliesst im Primärkreis und damit auch im Sekundärkreis des ersten Trenntransformators 77 kurzzeitig ein Strom, der über eine mit der Sekundärwicklung dieses ersten Trenntransformators 77 in Durchlassrichtung in Reihe geschaltete zweite Diode 79 eine Last durchfliesst, die aus einem R/C-Parallelkreis 80 besteht. In dieser Last entsteht somit ein Spannungsabfall, der einem Logikwert "1" entspricht und der am "Ramp"-Eingang des Spannungs/Zeit-Wandlers 46 liegt. In diesem Fall wird, wie bereits erwähnt, der "Ramp control"-Umschalter im letzteren umgeschaltet. Parallel zur Reihenschaltung der Primärwicklung des ersten Trenntransformators 77 und des Speisewiderstandes 78 liegt eine dritte Diode 81, deren Kathode mit dem positiven Pol der Speisegleichspannung $V_{cc}$ verbunden ist. Der nicht mit einer Diode verbundene Pol der Sekundärwicklung des ersten und des zweiten Trenntransformators 77 und 69 sind miteinander und der Masse des Spannungs/Zeit-Wandlers 46 verbunden.

./.

PA 2185

Der $\bar{Q}$-Ausgang des Freigabe-Flip Flop 52 speist den "Enable"-Eingang der Kaskadenschaltung 47. Der auf eine einzige Leitung reduzierte Steuerbus 43b ist mit den "Clear"-Eingängen der letzteren und des "Ramp"-Flip Flop 50 verbunden. An den z.B. zwölf Paralleleingängen der Kaskadenschaltung 47 liegt z.B. das Binärwort "000000011110", und dessen "Load"-Eingang wird von einem ersten Steuergatter 82 gesteuert, dessen erster Eingang am $\bar{Q}$-Ausgang des "Ramp"-Flip Flop 50 liegt.

Die beiden niedrigsten Bit der 12 Bit besitzenden Zählkette 33 werden nicht benutzt. Sie dienen nur dazu, den Einkopplungsfehler des Ausgangssignals des Spannungs/Zeit-Wandlers 46 gering zu halten. Die folgenden 8 Bit beinhalten den Messwert. Das elfte Bit stellt das Vorzeichen des Messwertes dar und das zwölfte Bit ist z.B. ein Kontrollbit.

Erscheint am Ausgang des elften Bit ein Logikwert "1", was nach 1024 Taktimpulse oder ca. 2 ms geschieht, werden die "Load"-Eingänge der Binärzähler der Kaskadenschaltung 47 über einen zweiten Eingang des ersten Steuergatters 82 aktiviert, so dass mit der nächsten positiv gehenden Flanke der Binärzähler-Taktfrequenz deren Kaskadenschaltung 47 z.B. mit dem Wert 1920 geladen wird. Mit diesem Wert wird der Vorstrom zur Erzeugung einer minimalen Rampe im Spannungs/Zeit-Wandler 46 kompensiert. Dieser Wert wurde so gewählt, dass nach 128 Taktimpulsen die Kaskadenschaltung 47 mit einem Stand 2048 in die Ausgangslage geht, welche dem Nullpunkt des Analog/Digital-Wandlers 49 entspricht. Dieser Zustand stellt den negativen Messwert am Bereichsende dar. Der entsprechende Digitalwert besteht durchwegs aus "0" und das Vorzeichen ist "1". Gleichzeitig mit dem Laden der Binärzähler der Kaskadenschaltung 47 setzt der Ausgang des elften Bit über einen ersten Eingang eines zweiten Steuergatters 83 und dessen Takteingang auch das "Ramp"-Flip Flop 50, welches das Freigabegatter 51 mittels seines Q-Ausgangs freigibt, so dass die Rampentaktfrequenz die der galvanischen Trennung dienende erste Transformatorschaltung 34 erreicht und über diese ein Logikwert "1" am "Ramp"-Eingang des Spannungs/Zeit-Wandlers 46

./.

PA 2185

erscheint, so dass dessen "Ramp-Control"-Umschalter betätigt wird und damit den Eingang dieses Wandlers vom Eingangssignal abtrennt und einen konstanten Referenzstrom mit umgekehrtem Vorzeichen dem Integrator zuleitet. Die Integratorausgangsspannung, die bis dahin einen steigenden Verlauf hatte, sinkt jetzt nach Null zurück und erreicht nach Ablauf einer Senkzeit $t_2$ den Komparator-Schwellwert. Mit der nächsten positiv gehenden Flanke der Zähler-Taktfrequenz wird das Freigabe-Flip Flop 52 zurückgestellt und sperrt die Zählkette. Da die maximale Spannung, welche der Integrator nach einer Integrationszeit $t_1$ erreicht, vom Messwert abhängig ist und die Neigung der abfallenden Rampe konstant ist, ist die Senkzeit $t_2$ dem Messwert am Eingang des Spannungs/ Zeit-Wandlers 46 proportional. Die Messung der Senkzeit $t_2$ mittels der Zählkette 33 und dessen 500 kHz-Taktfrequenz ergibt einen den analogen Messwert darstellenden Digitalwert. Da für die Messung der beiden Zeiten $t_1$ und $t_2$ die gleiche Zählkette 33 benutzt wird, wird der Vorteil erzielt, dass dessen Taktfrequenz nicht absolut genau sein muss. Sie soll lediglich während einer Messperiode $(t_1 + t_2)$ konstant bleiben.

Die beschriebene Analog/Digital-Wandlung liefert z.B. folgende Zusammenhänge:

| Analoger Messwert | Dezimalwert | Vorzeichen | Dualwert |
|---|---|---|---|
| + 2,04 V | + 255 | 0 | 1 1 1 1 1 1 1 1 |
| 0 V | 0 | 0 | 0 0 0 0 0 0 0 0 |
| − 8 mV | − 1 | 1 | 1 1 1 1 1 1 1 1 |
| − 2,04 V | − 256 | 1 | 0 0 0 0 0 0 0 0 |

Dies entspricht einem "two's complement binary"-Code.

Alle Flip Flop der Zählerkette 33 sind z.B. vom Typ 74LS74 und alle ihre Steuergatter Nand-Gatter vom Typ 74LS00.

./.

PA 2185

Der Rampentakteingang R der ersten Transformatorschaltung 34 liegt über einem Inverter 84, z.B. vom Typ 74LS06, am zweiten Eingang des zwei Eingänge aufweisenden zweiten Steuergatters 83 und ein Logikwert "1" am D-Eingang des "Ramp"-Flip Flop 50.

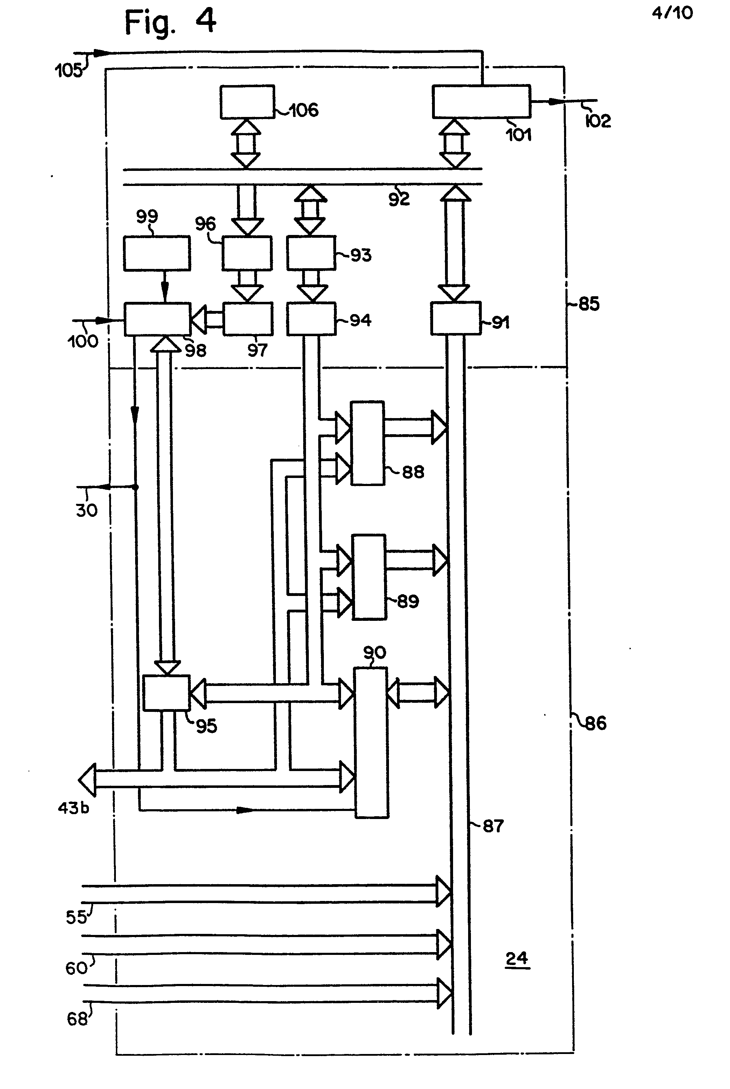

In der Fig. 4 ist die Steuerschaltung 24 (aus Fig. 1) dargestellt, bestehend aus einem Mikroprozessor 85, z.B. vom Typ 8085 der Firma Intel, Santa Clara, California, und einer Steuer/Speicher-Schaltung 86. Der Messwert-, der Zählwert- und der Melde-Ausgangsbus 55, 60 und 68 der Aufbereitungsschaltung 25 (nach Fig. 2) speisen die Steuer/Speicher-Schaltung 86 und sind alle innerhalb dieser Schaltung mit einem gemeinsamen Datenbus 87 verbunden. Auch die Datenausgänge eines Festwertspeichers 88 und eines programmierbaren Festwertspeichers 89 sowie die Datenanschlüsse eines Schreib/Lese-Speichers 90 liegen an diesem gemeinsamen Datenbus 87, der über einen Datenpufferspeicher 91 des Mikroprozessors 85 den internen Bus 92 des letzteren speist. Der interne Bus 92 ist im Mikroprozessor 85 mittels Busverbindungen in der angegebenen Reihenfolge über ein Adresse-Register 93 und einen Adressepufferspeicher 94 mit dem Adresseausgang des Mikroprozessors 85 verbunden. Letzterer steuert mittels Busverbindungen die Adresseeingänge des Festwertspeichers 88, des programmierbaren Festwertspeicher 89, des Schreib/Lese-Speichers 90 und eines Adressedecodierers 95. Diese Speicher und dieser Decodierer bilden zusammen die Steuer/Speicher-Schaltung 86. Innerhalb des Mikroprozessors 85 steuert der interne Bus 92 ausserdem noch in der angegebenen Reihenfolge mittels Busverbindungen über ein Instruktionsregister 96 und einen Instruktionsdecodierer 97 ein Steuerwerk 98, dessen Takteingang am Ausgang eines Systemoszillators 99 des Mikroprozessors 85 liegt. Das Steuerwerk 98 speist seinerseits mittels einer Busverbindung die Instruktionsanschlüsse des Adressedecodierers 95, dessen Bus-Ausgang einerseits die Steuereingänge des Festwertspeichers 88, des programmierbaren Festwertspeichers 89 und eines im Schreib/Lese-Speicher 90 enthaltenen "Timers" und andererseits den Steuerbus 43b der Aufbereitungsschaltung 25 steuert. Der Ausgang der Rückstellschaltung 29 liegt am Rückstell-

./.

PA 2185

eingang 100 des Steuerwerks 98 und dessen Taktausgang am Systemtaktausgang 30 und an einem Takteingang des "Timers" des Schreib/Lese-Speichers 90. Der interne Bus 92 des Mikroprozessors 85 speist über eine Serieausgangsschaltung 101 dessen Telegrammausgang 102, der seinerseits, wie aus der Fig. 1 ersichtlich, an einem Telegrammeingang 103 des Fernwirk-Senders 21 liegt. Dessen Baudtaktausgang 104 (Fig. 1) ist mit einem Takteingang 105 der Serieausgangsschaltung 101 verbunden.

Die Serieausgangsschaltung 101 enthält unter anderem einen Prüfbit-Codierer zur Erzeugung von "Parity bits". Der interne Bus 92 liegt ausserdem noch über eine Busverbindung an den Datenanschlüssen einer "Arithmetic Logik Unit" (ALU) 106 die unter anderem einen nicht gezeichneten Akkumulator enthält.

Der Schreib/Lese-Speicher 90 ist z.B. vom Typ 8156 der Firma Intel, der Festwertspeicher 88 z.B. ein EPROM 2732 der gleichen Firma, der programmierbare Festwertspeicher 89 ist z.B. mittels "Dual in line"-Schalter und Bus-Leitungstreiber vom Typ 74LS368 aufgebaut und der Adressedecodierer 95 mittels Gatter der "Low Power Schottky"-Reihe vom Typ 74LS... . Als Serieausgangsschaltung 101 kann auch ausserhalb des Mikroprozessors 85 ein USART z.B. vom Typ 8251 der Firma Intel verwendet werden.

Der Mikroprozessor 85 und die Speicher der Steuer/Speicher-Schaltung 86 bilden einen Mikrocomputer, der als zentrale Steuereinheit für sämtliche Funktionen der Unterstelle 2 arbeitet.

Im Festwertspeicher 88 sind die Ablaufprogramme des Mikrocomputers und im feldprogrammierbaren Festwertspeicher 89 die stationsspezifischen Werte, wie z.B. Stationsnummer, Baudrate, Sende-Zeitfenster usw. gespeichert. Im Schreib/Lese-Speicher 90 werden über die entsprechenden Eingangsbusverbindungen der Steuerschaltung 24 und dem gemeinsamen Datenbus 87 alle digitalen Messwerte, Meldungen und Zählwerte zwischengespeichert. Die letzteren allerdings, da sie ja als Impulsfolge er-

./.

scheinen, deren Frequenz dem Zählwert proportional ist, erst nachdem sie im Akkumulator der "Arithmetic Logic Unit" 106 kontinuierlich aufsummiert, d.h. gezählt wurden während einer bestimmten Registrierperiode. Nach Ablauf derselben wird die so ermittelte Frequenz als Digitalwert im Schreib/Lese-Speicher 90 abgespeichert.

Der Mikrocomputer benötigt für einen einwandfreien Betrieb eine Speisespannung $V_{cc}$ zwischen 4,75 V und 5,25 V. Um eventuelle Fehloperationen bei Unterspannung zu verhindern, blockiert die Rückstellschaltung 29 den Mikrocomputer bei einer Speisespannung $V_{cc} < 4,75$ V. Diese Rückstellschaltung 29 ist nicht Gegenstand eines Patentanspruchs und wird daher nicht näher beschrieben.

Die im Schreib/Lese-Speicher 90 abgespeicherten digitalen Daten werden durch den Mikroprozessor 85 im richtigen Zeitfenster zeitlich nacheinander abgerufen, wobei die Serieausgangsschaltung 101 die einzelnen Bit der einzelnen Datenwerte zeitlich seriell nacheinander anordnet und Ihnen auf bekannte Weise noch "Parity bits" zu Prüfzwecken hinzufügt. Seine einzelnen Bit erreichen somit seriell zeitlich nacheinander am Telegrammausgang 102 der Steuerschaltung 24. Dem so entstandenen Daten-Telegramm wird in der Regel ein aus dem programmierbaren Festwertspeicher 89 abgerufenes, ebenfalls aus seriellen Bit bestehendes Vortelegramm vorangestellt. Dieses enthält z.B. Angaben über die Unterstelle und die Art der nachfolgenden Daten. Die Telegramme der verschiedenen Unterstellen 2 werden im Zeitmultiplex, zeitlich nacheinander gestaffelt gesendet. Zu diesem Zweck wird jedem Sender ein Zeitfenster zugeordnet und über den programmierbaren Festwertspeicher 89 einprogrammiert. Die Uebertragung erfolgt dank der netzsynchronen Baudtaktfrequenz am Takteingang 105 der Serieausgangsschaltung 101 netzsynchron.

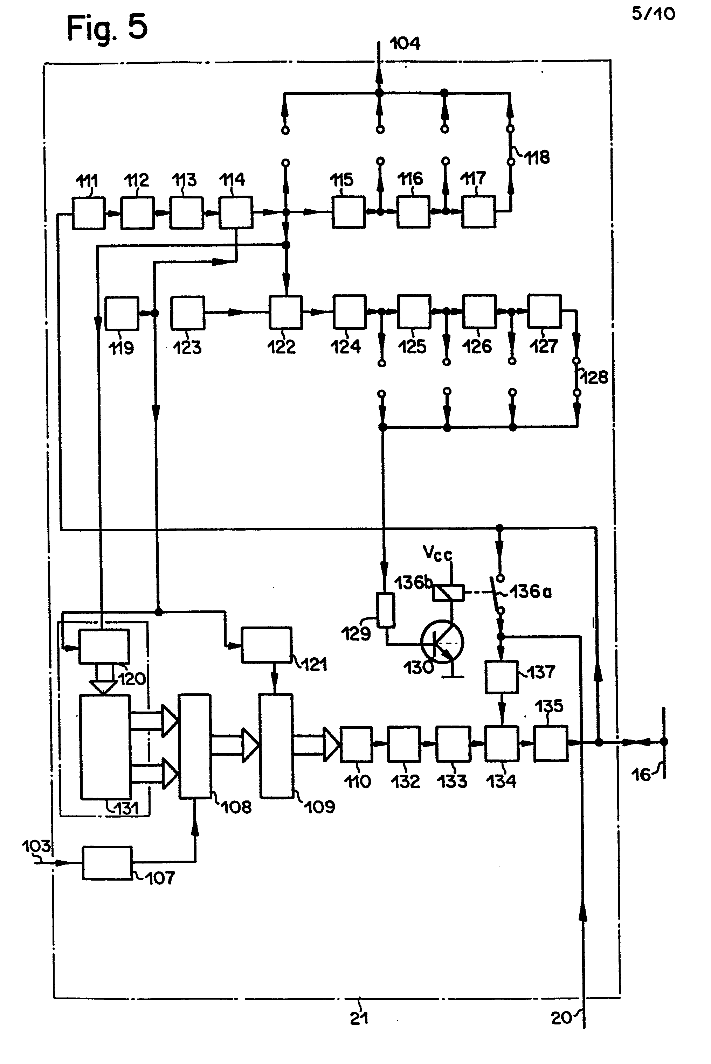

In der Fig. 5 ist der Fernwirk-Sender 21 dargestellt. Sein Telegrammeingang 103 steuert über einen Fehlerkorrektur-Codierer 107

./.

PA 2185

den Steuereingang eines Logik-Multiplexers 108 und schaltet dadurch beim Logikwert "0" ein "0-Chirp"-Signal und beim Logikwert "1" ein "1-Chirp"-Signal durch auf dessen Datenausgangsbus, welcher über einen "Chirp"-Pufferspeicher 109 mit dem Digitaleingang eines Digital/Analog-Wandlers 110 verbunden ist.

Der Ausgang des Fernwirk-Senders 21 liegt am Eingang von dessen Netzfilter 111 und gleichzeitig am Niederspannungsnetz 16. Das Netzfilter 111 ist z.B. ein sehr selektives zweistufiges aktives Bandpassfilter, das mittels Operationsverstärker, z.B. vom Typ LM358, aufgebaut ist. Es eliminiert alle Rundsteuer- und Fernwirksignale sowie alle im Niederspannungsnetz 16 vorhandenen Störer, so dass an seinem Ausgang und somit am Eingang eines nachgeschalteten Komparators 112, z.B. vom Typ LM311, die reine 50 Hz-Wechselspannung erscheint. Der Komparator 112 wandelt die Sinusin eine Rechteckspannung um, deren Frequenz in dem ihm nachgeschalteten Frequenzverdoppler 113 auf 100 Hz erhöht wird. Dieser, z.B. aufgebaut mittels zwei monostabiler Multivibratoren vom Typ 74LS221 und eines Oder-Gatters 74LS32, speist seinerseits einen Signaleingang eines Phasenschiebers 114 mit z.B. 4 μs dauernden Rechteckimpulsen. Die Ausgangsfrequenz dieses Phasenschiebers 114 wird mittels einer nachfolgenden ersten Teilerkette, bestehend in der angegebenen Reihenfolge aus einem ersten Teiler 115, einem zweiten Teiler 116 und einem dritten Teiler 117, durch zwei, vier bzw. acht geteilt, so dass am Ausgang des Phasenschiebers 114 des ersten Teilers 115, des zweiten Teilers 116 und des dritten Teilers 117 in der angegebenen Reihenfolge die Bittaktfrequenzen 100 Hz, 50 Hz und 12,5 Hz erscheinen. Eine dieser Bittaktfrequenzen wird als Baudtaktfrequenz mit Hilfe einer gelöteten ersten Drahtbrücke 118 ausgewählt und auf dem Baudtaktausgang 104 geschaltet, welcher z.B. ein "Open collector"-Ausgang ist. Diese erste Teilerkette besteht z.B. aus einem "Divide by N counter" MC14018.

./.

Ein erster Lokaloszillator 119 mit einer Ausgangsfrequenz von z.B. 204,8 Hz speist sowohl einen Takteingang des Phasenschiebers 114, als auch den Takteingang eines Adressenzählers 120 und den Eingang eines Verzögerungsgliedes 121.

Der Lokaloszillator 119 ist nach einer bekannten elektrischen Schaltung mittels eines 4,9152 MHz-Quarzes und mehrerer Nand-Gattern, z.B. vom Typ 74LS04, aufgebaut, wobei die so erzeugte Frequenz von 4,9152 MHz in einem nachgeschalteten, nicht gezeichneten Teiler, bestehend z.B. aus einer Kaskadenschaltung eines "Divide by 12 counter" vom Typ 74LS92 und eines Flip Flop 74LS74, durch vierundzwanzig geteilt wird und so die Ausgangsfrequenz 204,8 kHz ergibt.

Ein mittels nicht gezeichneter Schalter programmierbarer Binärzähler, z.B. vom Typ 74LS193, zählt im Phasenschieber 114 eine programmierte Anzahl Perioden dieser Ausgangsfrequenz, nachdem diese vorher noch mittels eines "12 bit binary counter", z.B. vom Typ MC14040, durch z.B. im Fall einer 50 Hz-Netzspannung 341 geteilt wurde. Eine Periode der so erzeugten 600 Hz-Frequenz entspricht einem zwölftel der 50 Hz-Netzfrequenz, d.h. 30$^o$.

Nach Erreichen der programmierten Anzahl 600 Hz-Perioden wird im Phasenschieber 114 ein Ausgangs-Flip Flop, z.B. vom Typ 74LS74, gesetzt, dessen Q-Ausgang der Ausgang des Phasenschiebers 114 ist. Dieses Ausgangs-Flip Flop wird anschliessend durch das 204,8 kHz-Ausgangssignal des ersten Lokaloszillators 119 zurückgestellt. Das 100 Hz-Eingangssignal des Phasenschiebers 114 erscheint somit an seinem Ausgang um ein Vielfaches von $\varphi = 30^o$ verschoben. Gleichzeitig mit dem Erscheinen dieses Ausgangssignals wird der Eingang des Phasenschiebers 114 durch ein internes Freigabe-Flip Flop solange gesperrt, bis dieses durch eine erneute positive Flanke des 100 Hz-Eingangssignals wieder freigegeben wird. Alle sonstigen Bauelemente des Phasenschiebers 114 werden beim Erscheinen seines Ausgangssignals auf ihren Anfangszustand zurückgestellt. Natürlich kann die

./.

PA 2185

kleinstmögliche Phasenverschiebung von $\varphi = 30^{\circ}$ durch die Wahl geeigneter Teilerverhältnisse im ersten Lokaloszillator 119 und/oder im Phasenschieber 114 auf jeden beliebigen Wert abgeändert werden.

Der Ausgang des Phasenschiebers 114 speist noch zusätzlich einen Rückstelleingang des Adressenzählers 120 und einen Rückstelleingang eines vierten Teilers 122, der seinerseits die Ausgangsfrequenz von z.B. 12,8 kHz im Falle einer 50 Hz-Netzspannung eines zweiten Lokaloszillators 123 durch $2^9 = 512$ teilt, so dass seine Ausgangsfrequenz 25 Hz beträgt. Der zweite Lokaloszillator 123 ist z.B. aufgebaut mittels eines 12,8 kHz-Quarzes und mehrerer Nand-Gatter vom Typ 74LS04 gemäss einer bekannten Schaltung der Digitaltechnik. Der vierte Teiler 122 ist z.B. eine Kaskadenschaltung eines "12 bit binary counter" vom Typ MC14040 und zweier Flip Flop vom Typ MC14013.

Die 25 Hz-Ausgangsfrequenz wird in einer nachgeschalteten zweiten Teilerkette, bestehend in der angegebenen Reihenfolge aus einem fünften Teiler 124, einem sechsten Teiler 125, einem siebten Teiler 126 und einem achten Teiler 127 geteilt. Der fünfte Teiler 124 teilt seine Eingangsfrequenz von 25 Hz durch 1500, so dass seine Ausgangsfrequenz einer Periode von 1500/25 = 60 Sek = 1 Minute entspricht. Diese Ausgangsfrequenz wird im sechsten Teiler 125 durch 5 geteilt, so dass dessen Ausgangsperiode 5 Minuten beträgt. Der nachgeschaltete siebte Teiler 126 teilt die Ausgangsfrequenz des sechsten Teilers 125 seinerseits durch 3, so dass seine Ausgangsperiode 15 Minuten ist und der diesem siebten Teiler 126 nachgeschaltete achte Teiler 127 teilt dessen Ausgangsfrequenz durch 2, so dass eine Ausgangsperiode von 30 Minuten entsteht. Mittels einer eingelöteten zweiten Drahtbrücke 128 wird einer der Ausgänge des fünften bis achten Teilers 124 bis 127 ausgewählt und über einen Basiswiderstand 129 auf die Basis eines Schalttransistors 130 geschaltet und dient dem zyklischen Aufruf des Fernwirk-Senders 21. Der fünfte Teiler 124 besteht z.B. aus einer Kaskadenschaltung von drei Binärzählern vom Typ MC14161 und der sechste bis achte Teiler 125 bis 127 z.B. aus je einem solchen Binärzähler MC14161.                              ./.

PA 2185

0085753

Die Parallelausgänge des Adressenzählers 120 sind über eine Busverbindung mit dem Adresseeingang eines "Chirp"-Festwertspeichers 131 verbunden. Der Ausgang des Verzögerungsgliedes 121 speist seinerseits den Takteingang des "Chirp"-Pufferspeichers 109 und die digitalen Ausgangswerte des Logik-Multiplexers 108 werden dort verzögert kurzzeitig abgespeichert. Im "Chirp"-Festwertspeicher 131 sind sowohl die "0-Chirp"- als auch die "1-Chirp"-Signale gespeichert und erreichen dauernd über je eine getrennte Busverbindung einen ersten bzw. einen zweiten Dateneingang des Logik-Multiplexers 108.

Der Analogausgang des Digital/Analog-Wandlers 110 steuert den Ausgang des Fernwirk-Senders 21 über ein erstes Sendefilter 132, das der Eliminierung der Digitalisierungs-Oberwellen dient, einen der Spannungsverstärkung dienenden Treiber 133, einen Leistungsverstärker 134 und ein zweites Sendefilter 135 zum Einhalten der Rundfunk-Störvorschriften. Der Ausgang des Fernwirk-Senders 21 ist seinerseits über einen Relaiskontakt 136a mit dem Wechselspannungs-Eingang eines Speisegerätes 137 verbunden, wobei der letztere gleichzeitig am Aufrufeingang 20 des Fernwirk-Senders 21 liegt. Der Gleichspannungs-Ausgang des Speisegerätes 137 versorgt den Leistungsverstärker 134 mit seiner Speisespannung.

Der Emitter des Schalttransistors 130 liegt an Masse, und sein Kollektor ist über die zum Relaiskontakt 136a gehörende Relaisspule 136b mit dem positiven Pol der Speisegleichspannung $V_{cc}$ verbunden.

Entweder veranlasst das Relaiskontakt-Ausgangssignal des Rundsteuerempfängers 19 über den Aufrufeingang 20 des Fernwirk-Senders 21, oder das zyklische Aufrufsignal mit der Periode 1, 5, 15 bzw. 30 Minuten an der Basis des Schalttransistors 130 über den Relaiskontakt 136a das Einschalten des Speisegerätes 137 und damit die Inbetriebnahme des Leistungsverstärkers 134 und des Fernwirk-Senders 21.

./.

PA 2185

Der Adressenzähler 120 ist z.B. vom Typ MC14040, der "Chirp"-Festwertspeicher 131 z.B. vom Typ 2716 der Firma Intel, und der "Chirp"-Pufferspeicher 109 z.B. ein "Latch" vom Typ 74LS75. Das Verzögerungsglied 121 besteht z.B. aus zwei monostabilen Multivibratoren vom Typ 74LS221 und der Logik-Multiplexer 108 aus Und-Gattern z.B. vom Typ 74LS08. Die beiden Sendefilter 132 und 135 und der Digital/Analog-Wandler 110 sind z.B. mittels Operationsverstärkern vom Typ LF353 aufgebaut. Der Treiber 133 und der Leistungsverstärker 134 sind mittels bipolarer Transistoren aufgebaut und bestehen aus bekannten Schaltungen der Elektronik.

Die Verwendung des Fehlerkorrektur-Codierers 107 ist fakultativ. Er erzeugt z.B. einen Faltungscode der Klasse (2,1), d.h. aus jedem uncodierten Bit wird ein codiertes Doppelbit erzeugt. Dies geschieht auf bekannte Weise am einfachsten mit Hilfe eines Schieberegisters. Eine gewisse Anzahl von dessen Parallelausgängen erzeugen mit Hilfe eines ersten Exklusiv-Oder-Gatters das erste Bit des Doppelbit und eine gewisse Anzahl anderer Parallelausgänge erzeugen mit Hilfe eines zweiten Exklusiv-Oder-Gatters das zweite Bit des Doppelbit.

Die Uebertragung erlaubt folgende Betriebsarten:

- Normalbetrieb, wenn keine spontanen Ereignisse vorliegen. Es werden zyklische Telegramme gesendet mit unterschiedlichen Repetitionszeiten für jeden Uebertragungskanal, damit vermieden wird, dass zwei Uebertragungskanäle zufälligerweise immer gleichzeitig senden. Es muss für jedes Telegramm mit einer gewissen Wahrscheinlichkeit einer Kollision mit anderen Telegrammen gerechnet werden.

- Generalabfrage mittels eines Rundsteuerungs-Aufrufes, der gleichzeitig als Synchronisierzeichen für alle Uebertragungskanäle dient. Jeder Sender sendet sein Telegramm in dem ihm zugeteilten Zeitfenster. Nach einer solchen Generalabfrage

./.

PA 2185

gehen die Uebertragungskanäle wieder in zyklischen Normalbetrieb über. Letzterer kann durch eine entsprechende Programmierung auch unterdrückt werden; in diesem Falle wird ausschliesslich bei einer Generalabfrage übertragen, möglicherweise mit zusätzlichen Spontanübertragungen.

- Spontanübertragung ausgelöst durch eine Aenderung eines Meldezustandes. Dem Spontantelegramm folgen in immer grösser werdenden Abständen weitere Telegramme, bis der Sender schliesslich wieder in den Normalbetrieb übergeht. Jedes Telegramm enthält dabei immer den neuesten Zustand der Melde-Eingangssignale und dieser wird nicht quittiert.

- Synchronbetrieb. Bei Systemen mit Generalabfrage kann die Repetitionsperiode aller Sender gleich programmiert werden. Dadurch entsteht ein synchroner zyklischer Betrieb. Die Zeitsteuerung ist dabei netzsynchronisiert.

Die das Telegramm bildenden elektrischen Signale werden im Uebertragungskanal, also im Wechselstrom-Versorgungsnetz, einerseits stark gedämpft, z.B. durch Verluste in den Querzweigen und in den Reihenimpedanzen, vor allem aber im dritten Transformator 15, und andererseits stark gestört durch Störfrequenzen, z.B. Netzharmonische, und/oder Störzeitimpulse, so dass Spannungs-, Frequenz- und/oder Phasen-Verzerrungen bzw. Löcher entstehen können.

Dies alles führt zu relativ schlechten Störabständen (S/N-Verhältnissen) und bedingt zu ihrer Verbesserung besondere Massnahmen, z.B. unter anderem die Verwendung der bekannten "Chirp"-Frequenzmodulation. Diese ist eine Frequenzmodulation, deren Amplituden-Umhüllende während einer Impulsdauer konstant ist und deren Frequenz sich während der Dauer eines Signalimpulses gemäss einer beliebigen mathematischen Funktion ändert. Im folgenden wird der Einfachheit halber angenommen, ohne die Beschreibung

./.

dadurch einzuschränken, dass diese mathematische Funktion linear ist. Die Signalimpulse stellen z.B. die beiden Logikwerte "1" und "0" dar und besitzen in der Regel einen gleichen Frequenzhub. Sie unterscheiden sich bei der klassischen "Chirp"-Modulation nur dadurch, dass die Frequenzhubbereiche für beide Logikwerte unterschiedlich und nicht überlappend sind, und dass für den einen Logikwert eine steigende und für den anderen eine sinkende mathematische Funktion verwendet wird. Beide Logik-Signalimpulse haben - wie bei einer Frequenzmodulation zu erwarten war - eine sehr grosse, theoretisch unendliche Bandbreite. Dies verhindert den Betrieb vieler Sender im Frequenzmultiplex-Verfahren auf dem gleichen Uebertragungsweg.

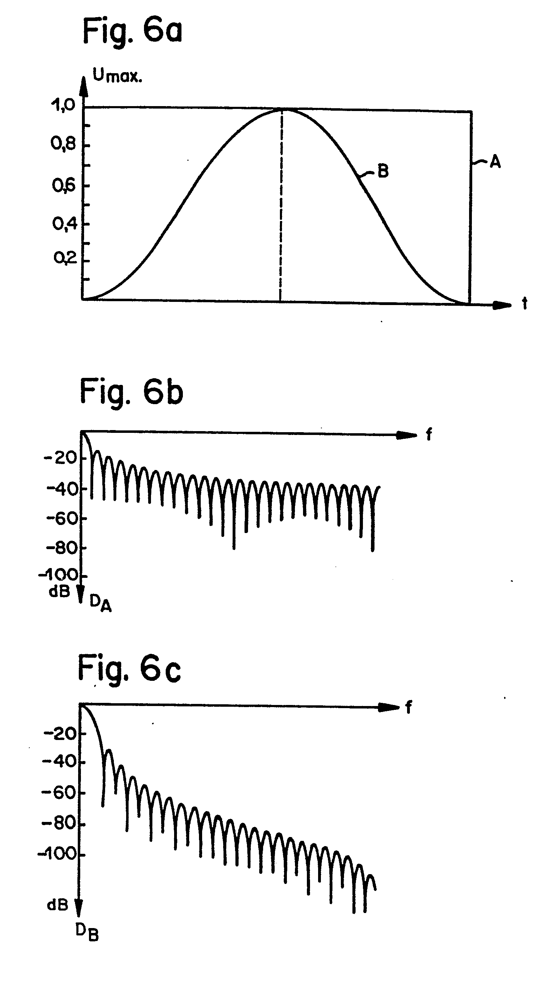

Eine Verbesserung wird erzielt durch die Verwendung einer abgeänderten "Chirp"-Modulation, deren Amplituden-Umhüllende während einer Impulsdauer nicht mehr konstant ist, sondern deren Einsatz- und Schlussflanken kontinuierlich, z.B. gemäss einer Cosinus-Funktion, steigen bzw. fallen. Die Dauer der Flanken beträgt z.B. je 15 % der Dauer der Signalimpulse, wobei während den restlichen 70 % der Impulsdauer die Amplituden-Umhüllende konstant bleibt und den maximalen Wert besitzt. Die Dauer der Flanken kann z.B. auch 50 % der Signalimpulsdauer betragen, wobei dann die Dauer der konstanten maximalen Amplituden-Umhüllenden gleich Null ist. Die letztere "Chirp"-Modulation wird in der Fig. 6a bis Fig. 6c mit der klassischen "Chirp"-Modulation verglichen. Diese Werte der Amplituden-Umhüllenden der beiden "Chirp"-Signalimpulse "1" und "0" eines Uebertragungskanals sind im "Chirp"-Festwertspeicher 131 gespeichert.

In der Fig. 6a ist eine normierte Amplituden-Umhüllende $U_{max}$ eines klassischen "Chirp"-Signalimpulses A und eines abgeänderten "Chirp"-Signalimpulses B, letzterer mit je 50 % Ein- und Ausschwingzeit, in Funktion der Zeit t dargestellt. In der Fig. 6b ist das nur schwach gedämpfte, sehr breitbandige Frequenzspektrum $D_A$ des klassischen "Chirp"-Signalimpulses A in Funktion der Frequenz f wiedergegeben. Die Fig. 6c zeigt, ebenfalls in Funk-

./.

tion der Frequenz f, das sehr gedämpfte und daher weniger breitbandige Frequenzspektrum $D_B$ des abgeänderten "Chirp"-Signalimpulses B.

Die Anzahl der im Frequenzmultiplex-Verfahren auf dem gleichen Uebertragungsweg betriebenen Uebertragungskanäle kann erhöht werden durch Verwendung überlappender Frequenzhübe für frequenzmässig benachbarte einzelne Kanäle einerseits und für die beiden frequenzmässig benachbarten Logikwerte "1" und "0" andererseits. Dies ist möglich unter der Voraussetzung, dass

- die mathematischen Funktionen der beiden Logikwerte und aller Uebertragungskanäle entweder alle steigende oder alle sinkende Funktionen der Zeit sind,

- die gesendeten "Chirp"-Signalimpulse netzsynchronisiert und

- in den Empfängern geeignete Demodulatoren verwendet werden.

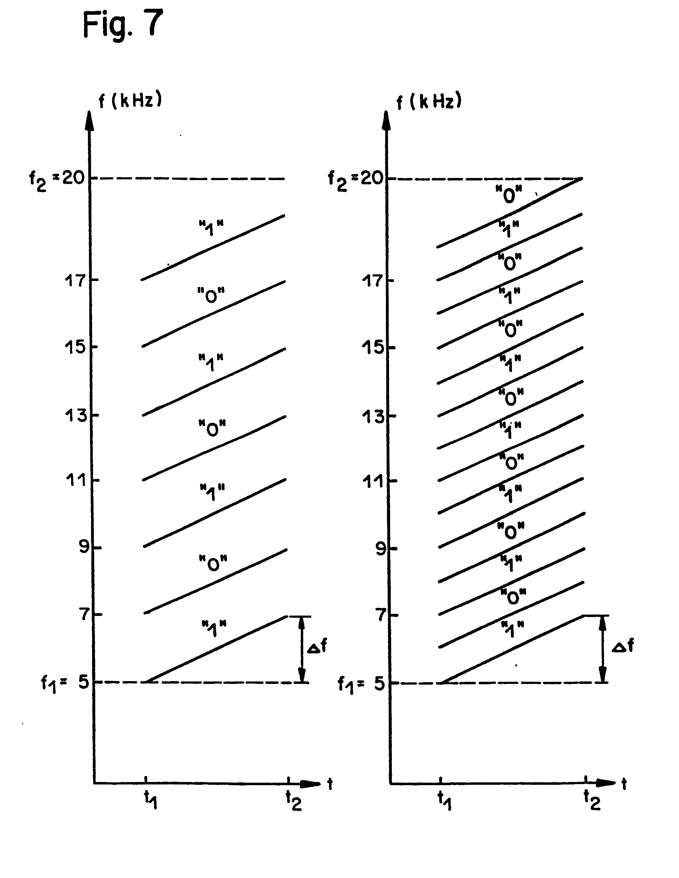

In der Fig. 7 sind links frequenzmässig nicht überlappende und rechts frequenzmässig überlappende Frequenz/Zeit-Diagramme der "Chirp"-Signalimpulse dargestellt. Die mathematischen Funktionen werden dabei alle als linear steigend und die Frequenzhübe $\Delta F$ alle z.B. gleich 2 kHz angenommen. Zwei aufeinanderfolgende Kennlinien bilden einen Uebertragungskanal, wobei die unterste Kennlinie eines Kennlinienpaares z.B. jeweils den "1"-"Chirp"- und die obere den "0"-"Chirp"-Signalimpuls darstellt. Die "Chirp"-Signalimpulse werden gleichzeitig gesendet, beginnen im Augenblick $t_1$ und enden im Augenblick $t_2$.

Besonders günstig zur Uebertragung von Informationen über eine grössere Entfernung im Wechselstrom-Versorgungsnetz ist der Frequenzbereich $f_1$ = 5 kHz bis $f_2$ = 20 kHz. In diesem Frequenzbereich können bei nichtüberlappenden Frequenzhüben nur sieben

./.

PA 2185

Kennlinien, d.h. dreieinhalb "1/0"-Kanäle untergebracht werden, bei überlappenden Frequenzhüben dagegen vierzehn, d.h. sieben "1/0"-Kanäle, unter der Annahme, dass die Ueberlappung $\Delta f/2 = 1$ kHz beträgt.

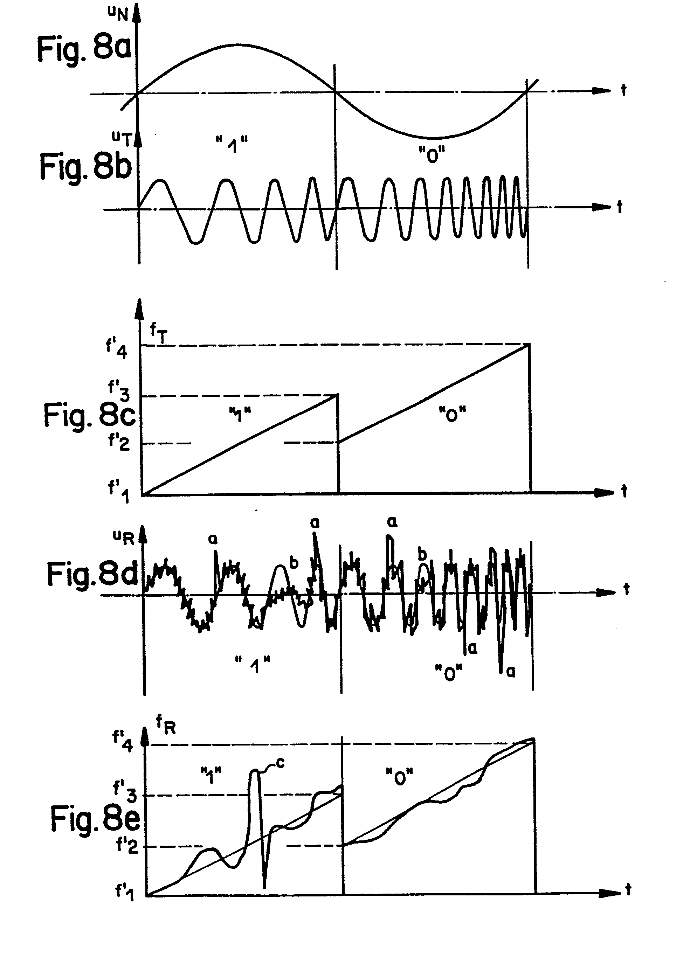

In der Fig. 8 sind in den Diagrammen 8a bis 8e die Signalverhältnisse auf dem Uebertragungsweg in Funktion der Zeit t dargestellt, allerdings der Einfachheit halber unter der Annahme der Verwendung klassischer "Chirp"-Signalimpulse mit steilen Flanken und konstanten Amplituden-Umhüllenden, jedoch mit überlappendem Frequenzhub. Die Baudtaktfrequenz wurde für diese Diagramme gleich 100 Bd gewählt. Jedoch sind in Europa auch 50 Baud, 25 Baud, 12,5 Baud und in USA 120 Baud, 60 Baud, 30 Baud und 15 Baud möglich. In der Fig. 8a ist eine reine ungestörte 50 Hz-Spannung $u_N$ eines Wechselstrom-Versorgungsnetzes wiedergegeben. Die Fig. 8b zeigt die ungestörten Augenblick-Spannungswerte $u_T$ eines "Chirp"-Telegramms, bestehend z.B. aus einem Doppelbit "10". Jeder Bitbeginn ist mit den Nulldurchgängen der 50 Hz-Spannung $u_N$ synchronisiert, und jedes besitzt im Fall einer 100 Baud-Taktfrequenz die Dauer einer halben Periode der 50 Hz-Spannung $u_N$, d.h. 10 ms. In der Fig. 8c ist das ungestörte "Chirp"-Telegramm noch einmal dargestellt, doch diesmal als Augenblick-Frequenzwerte $f_T$ in Funktion der Zeit t. Das erste Bit mit dem Logikwert "1" beginnt mit der Frequenz $f'_1$ und steigt linear innerhalb 10 ms bis zur Frequenz $f'_3$ an. Das zweite Bit mit dem Logikwert "0" beginnt mit der Frequenz $f'_2$ und endet nach 10 ms mit der Frequenz $f'_4$, wobei $f'_1 < f'_2 < f'_3 < f'_4$ ist. Der Frequenzhub für beide Bit wurde gleich gross gewählt, so dass $f'_3 - f'_1 = f'_4 - f'_2$ gilt. Die Fig. 8d zeigt mögliche, stark gestörte Augenblick-Spannungswerte $u_R$ und die Fig. 8e mögliche, stark gestörte Augenblick-Frequenzwerte $f_R$ des "Chirp"-Telegramms, wie sie z.B. am Eingang des Fernwirk-Empfängers 22 erscheinen können. In der Fig. 8d sind an den Stellen a starke Stör-Zeitimpulse und an den Stellen b starke Stör-Zeitimpulslücken wirksam. Im Bit "1" der Fig. 8e ist an der Stelle c ein starker Stör-Frequenzimpuls aktiv.

./.

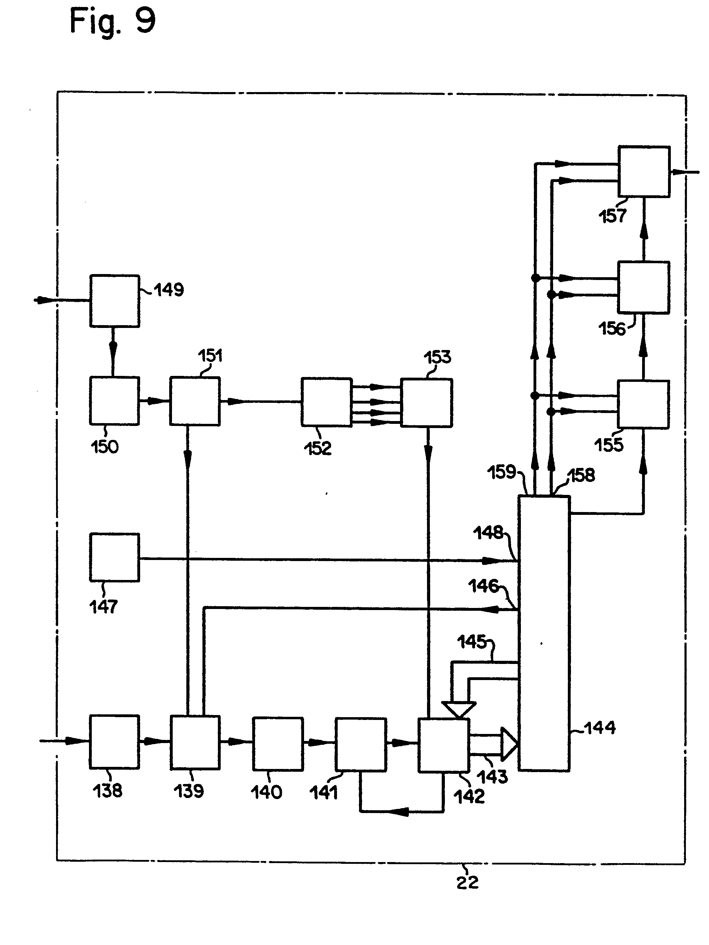

Die Fig. 9 lässt Einzelheiten des in der Fig. 1 nur angedeuteten Fernwirk-Empfängers 22 erkennen. Der Ankopplungswandler 10 speist über den Eingang dieses Empfängers direkt den Eingang von dessen Empfangssignal-Aufbereitungsschaltung 138, deren Ausgang seinerseits den Signaleingang eines Quadratur-Demodulators 139 direkt ansteuert. Der Ausgang dieses Demodulators 139 ist direkt mit dem Eingang einer PBF-Ermittlungsschaltung 140 (P = Power, B = Bandwidth, F = Frequency) und deren Ausgang wiederum direkt mit dem Signaleingang einer "Sample and Hold"-Schaltung 141 verbunden. Der Ausgang der letzteren speist direkt den Analogeingang eines Analog/Digital-Wandlers 142, dessen Statusausgang den "Sample and Hold"-Umschalteingang der "Sample and Hold"-Schaltung 141 steuert und dessen Digitalausgang über einen Signal-Eingangsbus 143 direkt auf den Signaleingang einer Empfänger-Steuerschaltung 144 geschaltet ist. Die "Sample and Hold"-Schaltung 141 ist z.B. vom Typ LF398 und der Analog/Digital-Wandler 142 z.B. vom Typ AD ADC 80-12 der Firma Analog Devices, Norwood, Massachusetts, USA. Die Empfänger-Steuerschaltung 144 steuert über einen Empfänger-Steuerbus 145 einen ersten Steuereingang des Analog/Digital-Wandlers 142 und speist über einen Empfänger-Systemtaktausgang 146 einpolig direkt einen Steuereingang des Demodulators 139. Eine Empfänger-Rückstellschaltung 147 ist gleich aufgebaut wie die Rückstellschaltung 29 der Unterstelle 2 (Fig. 1), übt die gleiche Funktion aus und steuert einpolig direkt einen Empfänger-Rückstelleingang 148 der Empfänger-Steuerschaltung 144.

Eine 50 Hz- bzw. 60 Hz-Niederspannung am Ort der Zentrale 1 speist über einen Impedanzwandler 149 mit hochohmigem Eingang einen Sinus/Rechteck-Wandler 150, dessen rechteckförmiges Ausgangssignal direkt am Eingang eines einstellbaren Empfänger-Phasenschiebers 151 liegt. Ein erster Ausgang des letzteren ist mit einem Bitsynchronisierungseingang des Demodulators 139 und ein zweiter Ausgang mit dem Eingang eines Binärzählers 152 verbunden, dessen vier Parallelausgänge einen Zähldecodierer 153 speisen. Der Ausgang des letzteren ist auf einen zweiten Steuereingang des Analog-Digital-Wandlers 142 geschaltet. Der

./.

Signalausgang der Empfänger-Steuerschaltung 144 speist in der angegebenen Reihenfolge über einen Fehlerkorrektur-Decodierer 155, einen Prüfbit-Decodierer 156 und einen Empfänger-Pufferspeicher 157 den Ausgang des Fernwirk-Empfängers 22, sein "Pegel gut"-Ausgang 158 steuert je einen ersten Steuereingang und sein Taktausgang 159 je einen zweiten Steuereingang des Fehlerkorrektur-Decodierers 155, des Prüfbit-Decodierers 156 und des Empfänger-Pufferspeichers 157.

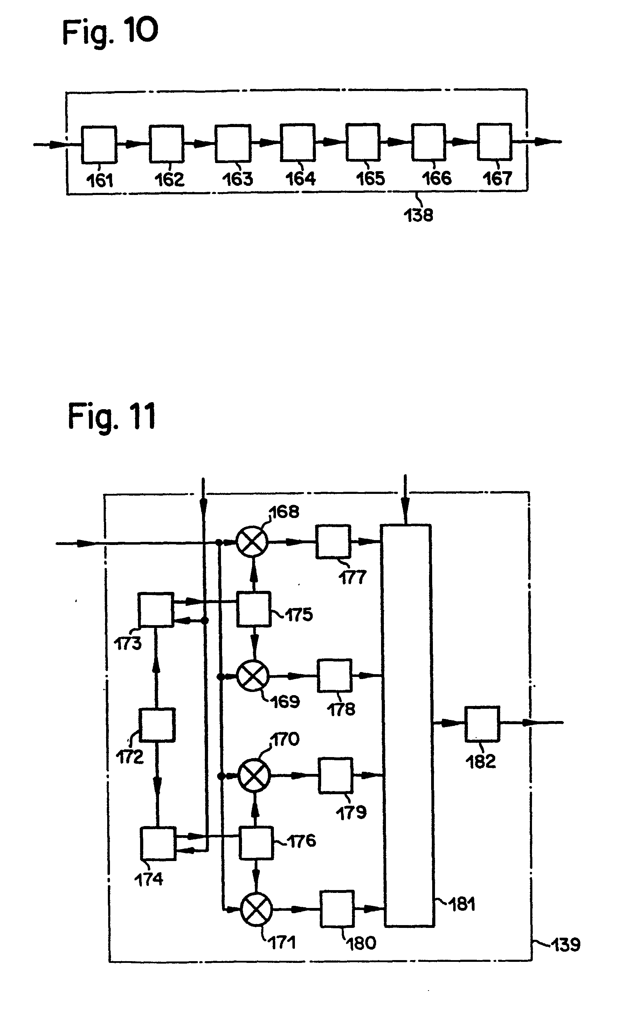

In der Fig. 10 ist die in der Fig. 9 angedeutete Empfangssignal-Aufbereitungsschaltung 138 näher dargestellt. Sie besteht in der angegebenen Reihenfolge aus einer Kaskadenschaltung eines Summen- bzw. Differenz-Verstärkers 161, eines Bandpass-Filters 162, eines Signalverstärkers 163, einer Begrenzerstufe 164, eines Vor-Entzerrers 165, eines Fein-Entzerrers 166 und einer "Automatic gain control"-Schaltung 167, wobei der Ausgang der letzteren gleichzeitig der Ausgang der Empfangssignal-Aufbereitungsschaltung 138 ist.

Diese letztere hat als Aufgabe, die an seinem Eingang anstehenden, möglicherweise sehr stark gestörten Empfangssignale gemäss Fig. 8d und Fig. 8e so aufzubereiten, dass die durch die Störer und die nichtidealen Uebertragungseigenschaften des Uebertragungsweges verursachten Signaldeformationen ganz oder zumindestens teilweise wieder rückgängig gemacht werden. Der Summen- bzw. Differenzverstärker 161 arbeitet einerseits als Strom/Spannungs-Wandler und bildet andererseits die Summe bzw. die Differenz der Ausgangsspannungen bzw. -ströme z.B. von mehreren Phasen des Ausgangssignals des Ankopplungswandlers 10 mit Hilfe eines auf bekannte Weise als Summen- bzw. Differenzverstärker beschalteten Operationsverstärkers, z.B. vom Typ LF353. Das Bandpassfilter 162 ist z.B. ein mehrstufiges, ebenfalls bekanntes Notch-Filter, welches ebenfalls mittels mehrerer Operationsverstärker, z.B. vom Typ LF353, aufgebaut ist und alle die Frequenzanteile der Störer eliminiert, die ausserhalb der Bandbreite des ungestörten Empfangssignals liegen.

./.

PA 2185

Nach einer Verstärkung im Vorverstärker 163 erreicht das Empfangssignal anschliessend die Begrenzerstufe 164. Diese besteht ebenfalls aus einem Operationsverstärker und stellt einen invertierenden Verstärker dar, dessen Verstärkungsfaktor normalerweise zehn ist, der jedoch auf bekannte Weise mittels Dioden auf drei heruntergeschaltet wird, wenn sein Eingangssignal zu gross ist, womit ein Uebersteuern der nachfolgenden Schaltungen vermieden wird.

Das Ausgangssignal der Begrenzerstufe 164 erreicht bei einer durch die Starkstromeinrichtungen bedingten räumlichen Entfernung von z.B. 100 m der ersten vier Blöcke der Empfangssignal-Aufbereitungsschaltung 138 vom Rest der Anlage über ein Koaxialkabel den Eingang des nachgeschalteten Vor-Entzerrers 165, dessen Aufgabe es ist, die durch den Uebertragungsweg verursachten Verzerrungen, primär vor allem Phasen- und/oder Frequenzverzerrungen der einzelnen Frequenzen des gesendeten Signals sowie Resonanz-Spitzen bzw. -Löcher zumindestens grob wieder rückgängig zu machen. Gleichzeitig mit der Phasen- bzw. Frequenz-Entzerrung ergibt sich auch eine Amplituden-Entzerrung, was sich wiederum günstig auf das Signal/Rausch-Verhältnis auswirkt. Der Vor-Entzerrer besitzt adaptive Fähigkeiten, da die Fernwirk-Sender 21 nicht nur an verschiedenen Orten des Wechselstrom-Versorgungsnetzes angebracht sein können, sondern sich auch dieses Netz und seine Topologie im Laufe der Zeit fortlaufend ändern können. Zu diesem Zweck wird jedem Telegramm eine Reihe von z.B. zehn "1" und "0" vorausgesendet.

Der nachfolgende Fein-Entzerrer 166, z.B. ein "Linear prediction filter", dient der Elimination aller voraussagbaren, d.h. repetitiven Störanteile, also insbesondere aller periodischen Störzeitimpulse ("spikes") sowie der Netzoberwellen. Dieser Fein-Entzerrer 166 ist nur bei sehr starken Störungen nötig. Er wird am günstigsten mittels eines adaptiv gesteuerten analogen Transversalfilters auf der Basis eines "Charged coupled device" (CCD) aufgebaut.

./.

Die anschliessende "Automatic Gain Control"-Schaltung 167 regelt ihr Eingangssignal mit einer Regelkonstante von z.B. einer bis zehn Sekunden auf konstantem Niveau und stellt einen Regler dar, der z.B. mittels mehrerer Operationsverstärker vom Typ LF353 aufgebaut ist.

In der Fig. 11 ist der Quadratur-Demodulator 139 (Fig. 9) dargestellt, dessen Eingangssignal gleich dem aufbereiteten Empfangssignal am Ausgang der Empfangs-Aufbereitungsschaltung 138 ist und jeweils dem Eingang eines ersten Mischers 168, eines zweiten Mischers 169, eines dritten Mischers 170 und eines vierten Mischers 171 zugeleitet wird. Ein Hilfsoszillator 172 speist einen ersten Referenzgenerator 173 und einen zweiten Referenzgenerator 174. Der erstere erzeugt, z.B. auf die gleiche Weise wie der Fernwirk-Sender 21 seine "Chirp"-Signalimpulse erzeugt, ein "1"-Referenz-"Chirp"-Signalimpuls und der letztere ein "0"-Referenz-"Chirp"-Signalimpuls, die in der angegebenen Reihenfolge je einen ersten bzw. zweiten $90^o$-Phasenschieber 175 bzw. 176 speisen. Jeder dieser beiden $90^o$-Phasenschieber 175 und 176 besitzt zwei Ausgänge: Am ersten erscheint ein um $0^o$ und am zweiten ein um $90^o$ gegenüber dem Eingangssignal phasenverschobenes Ausgangssignal. Diese vier Ausgangssignale speisen jeweils den zweiten Eingang eines der vier Mischer, und zwar das um $0^o$ phasenverschobene Ausgangssignal des ersten Phasenschiebers 175 den ersten Mischer 168, sein um $90^o$ phasenverschobenes Ausgangssignal den zweiten Mischer 169, das um $0^o$ phasenverschobene Ausgangssignal des zweiten Phasenschiebers 176 den dritten Mischer 170 und sein um $90^o$ phasenverschobenes Ausgangssignal den vierten Mischer 171. Der Ausgang des ersten Mischers 168 speist über ein erstes Tiefpassfilter 177 einen ersten Eingang, derjenige des zweiten Mischers 169 über ein zweites Tiefpassfilter 178 einen zweiten Eingang, derjenige des dritten Mischers 170 über ein drittes Tiefpassfilter 179 einen dritten Eingang und derjenige des vierten Mischers 171 über ein viertes Tiefpassfilter 180 einen vierten Eingang eines analogen Demodulator-Multiplexers 181, dessen Ausgang seinerseits über eine Rechenschaltung 182 mit dem Ausgang des Demodulators 139 verbunden ist. Der Bitsynchroni-

./.

sierungseingang des Demodulators 139 liegt am jeweiligen Synchronisiereingang der beiden Referenzgeneratoren 173 und 174.

Der analoge Demodulator-Multiplexer 181 ist zweipolig und besitzt zwei Stellungen: In der ersten Stellung sind der erste und der zweite Eingang und in der zweiten Stellung der dritte und der vierte Eingang mit seinem zweipoligen Ausgang verbunden. Die Steuerung der Stellung des Demodulator-Multiplexers 181 erfolgt über seinen Steuereingang.

In den vier Mischern 168 bis 171, z.B. vom Typ MC14066, werden die beiden jeweiligen Eingangssignale, d.h. das aufbereitete Empfangssignal und eines der vier Referenz-"Chirp"-Signale, miteinander multipliziert und die dadurch entstehenden höheren Frequenzen durch das nachfolgende Tiefpassfilter 177, 178, 179 bzw. 180 eliminiert. Die beschriebene Demodulation ist eine Quadratur-Detektion und verwendet zwei getrennte Demodulationen, eine für das empfangene "1"-Chirpsignal und eine für das empfangene "0"-Chirpsignal, und für jede der beiden Demodulationen zwei um $90^{\circ}$ phasenverschobene Referenzsignale. Die beiden so entstandenen Demodulationssignale zeigen die Amplitude des Empfangssignals wie auch dessen Phasenlage zum Referenzsignal an (Vektoren). An den Ausgängen des ersten und des zweiten Tiefpassfilters 177 und 178 erscheinen die Komponenten $\alpha_1$ und $\beta_1$ und an den Ausgängen des dritten und des vierten Tiefpassfilters 179 und 180 die Komponenten $\alpha_0$ und $\beta_0$ der Vektoren. Ist das Empfangssignal ein "1"-Chirpsignal, so dominieren die Komponenten $\alpha_1$ und $\beta_1$, ist es dagegen eine "0"-Chirpsignal, so besitzen die Komponenten $\alpha_0$ und $\beta_0$ das Uebergewicht. Der Wert der Vektoren ist somit

$$\sqrt{\alpha_1{}^2 + \beta_1{}^2} \text{ bzw. } \sqrt{\alpha_0{}^2 + \beta_0{}^2}.$$

Der Demodulator-Multiplexer 181, z.B. vom Typ LF13201, leitet zeitlich nacheinander die Wertepaare $(\alpha_1, \beta_1)$ und $(\alpha_0, \beta_0)$ der

./.

PA 2185

Rechenschaltung 182 zu, die daraus die Werte

$$\sqrt{\alpha_1^2 + \beta_1^2} \text{ und } \sqrt{\alpha_0^2 + \beta_0^2}$$

errechnet. Die Rechenschaltung 182 ist z.B. vom Typ BB4302 der Firma Burr-Brown, Tucson, Arizona, USA. Am Ausgang des Demodulators 139 erscheinen somit demodulierte Analogwerte des Empfangssignals. Aus diesen Analogwerten wird (siehe Fig. 9) in der nachfolgenden PBF-Ermittlungsschaltung 140 mindestens einer der drei Parameter Leistung, Bandbreite und Frequenz ermittelt in Form proportionaler elektrischer Spannungen. Diese werden in der nachfolgenden "Sample and Hold"-Schaltung 141 abgetastet und während der "Hold"-Zeit mittels des Analog/Digital-Wandlers 142 in Digitalwerte umgewandelt und über den Signal-Eingangsbus 143 der Empfänger-Steuerschaltung 144 zugeführt. Letztere ist identisch aufgebaut wie die Steuerschaltung 24 der Unterstelle 2 (Fig. 2), nur dass hier ein einziger Eingangsbus 143 statt deren drei (55, 60, 68) vorhanden ist. Der Empfänger-Steuerbus 145 entspricht dabei dem Steuerbus 43b (Fig. 1), der Empfänger-Systemtaktausgang 146 dem Systemtaktausgang 30 und der Empfänger-Rückstelleingang 148 dem Rückstelleingang 100 (Fig. 4). Der dem Takteingang 105 der Steuerschaltung 24 entsprechende Eingang wird hier nicht benutzt. Die digitalisierten Empfangswerte des Signal-Eingangsbus 143 werden im Schreib/Lese-Speicher der Empfängersteuerschaltung 144 abgespeichert und dessen Mikroprozessor kontrolliert für jedes Bit, ob das "1"- oder das "0"-Chirpsignal dominiert und speichert dementsprechend in einer bestimmten Zelle dieses Schreib/Lese-Speichers einen Logikwert "1" bzw. "0" ab. Diese Logikwerte werden anschliessend zeitlich seriell nacheinander ausgelesen und dem Signalausgang der Empfänger-Steuerschaltung 144 zugeleitet. Gleichzeitig werden noch, im Gegensatz zur Steuerschaltung 24, ein Signal "Pegel gut" uber den "Pegel gut"-Ausgang 158 und ein Taktsignal über den zweiten Taktausgang 159 den nachfolgenden Schaltungen zugeleitet und diese einerseits durch das erste Signal freigegeben und

./.

PA 2185

BAD ORIGINAL

0085753

andererseits durch das zweite Signal mit einer Taktfrequenz versehen. Beide Signale werden im Steuerwerk der Empfänger-Steuerschaltung 144 erzeugt bzw. aufbereitet.

Im Fehlerkorrektur-Decodierer 155 wird der Faltungscode (2, 1) decodiert und eventuell korrigiert mit Hilfe eines bekannten Viterbi-Decodierers. Anschliessend wird das so erhaltene Telegramm im Prüfbit-Decodierer 156 einer bekannten "Parity bit"-Kontrolle unterzogen und notfalls korrigiert, um schliesslich im Empfänger-Pufferspeicher 157 zur weiteren Auswertung zwischengespeichert zu werden.

Der Impedanzwandler 149 ist ein nichtinvertierender, z.B. mittels eines Operationsverstärkers LM301 aufgebauter Verstärker mit einem Verstärkungsfaktor 1 und einer hohen Eingangsimpedanz. Der Sinus/Rechteck-Wandler 150 ist ein Komparator z.B. vom Typ LM311. Der einstellbare Empfänger-Phasenschieber 151 ist z.B. gleich aufgebaut wie der Phasenschieber 114 der Unterstelle 2, nur dass zusätzlich noch ein Taktsignal über seinen zweiten Ausgang mit dem Takteingang des Binärzählers 152 verbunden ist, der seine Impulse zählt. Der Zählwert wird im Zähl-Decodierer 153 anschliessend decodiert, so dass der nachfolgende Analog/Digital-Wandler 142 im richtigen Augenblick freigegeben wird.

./.

PATENTANSPRUECHE

1. System zur Uebertragung digitaler Signalimpulse über Leitungen eines Wechselstrom-Energieverteilungsnetzes, vorwiegend entgegengesetzt zur Flussrichtung der Netzenergie, unter Anwendung einer "Chirp"-Frequenzmodulation und des Frequenzmultiplex-Verfahrens sowie einer Synchronisierung der Signalerzeugung in einem Sender und der Signalverarbeitung in einem Empfänger mit Hilfe der Frequenz der Netzwechselspannung, dadurch gekennzeichnet, dass sich die Frequenzhübe frequenzmässig benachbarter "Chirp"-Signalimpulse teilweise überlappen.

2. System nach Anspruch 1, dadurch gekennzeichnet, dass die Einsatz- und Schlussflanken der Amplituden-Umhüllenden eines jeden "Chirp"-Signalimpulses eine vorgegebene, begrenzte Steilheit besitzen.

3. System nach Anspruch 1 oder 2, dadurch gekennzeichnet, dass die Frequenzen der "Chirp"-Signalimpulse "1" und "0" gleichartige Funktionen der Zeit sind.

4. System nach einem der Ansprüche 1 bis 3, dadurch gekennzeichnet, dass die Einsatz- und Schlussflanken der Amplituden-Umhüllenden der "Chirp"-Signalimpulse Kosinusfunktionen der Zeit sind.

5. System nach einem der Ansprüche 1 bis 4, dadurch gekennzeichnet, dass die zeitliche Dauer der Einsatz- und der Schlussflanken der Amplituden-Umhüllenden der "Chirp"-Signalimpulse je annähernd 15 % der gesamten Signalimpulsdauer beträgt.

6. System nach einem der Ansprüche 1 bis 4, dadurch gekennzeichnet, dass die zeitliche Dauer der Einsatz- und der Schlussflanken der Amplituden-Umhüllenden der "Chirp"-Signalimpulse je annähernd 50 % der Signalimpulsdauer beträgt.

./.

PA 2185

7. System nach einem der Ansprüche 1 bis 6, dadurch gekennzeichnet, dass die Werte der Amplituden-Umhüllenden der "Chirp"-Signalimpulse in einem Festwertspeicher (131) eines Fernwirk-Senders (21) abgespeichert sind und dass Referenzgeneratoren (173; 174) eines Fernwirk-Empfängers (22) zugeordnete Festwertspeicher die Werte der Amplituden-Umhüllenden von Referenz-"Chirp"-Signalimpulsen enthalten.

8. System nach Anspruch 7, dadurch gekennzeichnet, dass im Fernwirk-Empfänger (22) Mischer (168 bis 171) vorgesehen sind, die empfangene und aufbereitete "Chirp"-Signalimpulse mit den Referenz-"Chirp"-Signalimpulsen multiplizieren.

9. System nach Anspruch 8, dadurch gekennzeichnet, dass die Amplituden-Umhüllenden der Referenz-"Chirp"-Signalimpulse den gleichen zeitlichen Verlauf besitzen wie diejenige der gesendeten "Chirp"-Signalimpulse.

10. System nach Anspruch 8, dadurch gekennzeichnet, dass die Referenz-"Chirp"-Signalimpulse über die gesamte Impulsdauer annähernd konstante Amplituden aufweisen.

11. System nach einem der Ansprüche 1 bis 10, gekennzeichnet durch eine Signalübertragung im Frequenzbereich von 5 kHz bis 20 kHz.

./.

PA 2185

Fig. 1

Fig. 2

**Fig. 3**

M = " 000000011110"

Fig. 4

0085753
4/10

Fig. 5

## Fig. 6a

## Fig. 6b

## Fig. 6c

PA 2185

# Fig. 7

Fig. 8a

Fig. 8b

Fig. 8c

Fig. 8d

Fig. 8e

# Fig. 9

Fig. 10

161  162  163  164  165  166  167

138

Fig. 11

168
177

175
173

169  178

172

170  179

176
174

171  180

181

182

139

| | **EINSCHLÄGIGE DOKUMENTE** | | | EP 82109761.5 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int Cl. ³) |
| D,A | <u>DE - B2 - 2 727 263</u> (LGZ LANDIS & GYR ZUG) <br><br> * Fig. 1a-2a,3,5,6: Ansprüche 1,2,10,14-17,25,26; Spalte 8, Zeile 67 - Spalte 9, Zeile 19; Spalte 11, Zeilen 42-47; Spalte 13, Zeilen 8-15 * <br><br> ---- | | 1-10 | H 04 B 3/54 <br> H 02 J 13/00 |

| RECHERCHIERTE SACHGEBIETE (Int Cl ³) |
|---|
| H 04 B 3/00 |
| H 04 J 1/00 |
| H 02 J 13/00 |
| H 04 Q 9/00 |
| G 08 C 15/00 |

Der vorliegende Recherchenbericht wurde für alle Patentansprüche erstellt.

| Recherchenort | Abschlußdatum der Recherche | Prüfer |
|---|---|---|
| WIEN | 08-04-1983 | DRÖSCHER |